# EUROPEAN PATENT SPECIFICATION

(11) **EP 4 369 759 B1**
(45) Date of publication and mention of the grant of the patent: **05.11.2025**
(21) Application number: 22900018.7
(22) Date of filing: 07.09.2022
(51) Int. Cl.: H04W 12/106, H04L 9/40, H04W 12/03, H04W 12/041

(54) **DATA TRANSMISSION PROTECTION METHOD, DEVICE AND SYSTEM**
VERFAHREN, VORRICHTUNG UND SYSTEM ZUM SCHUTZ VON DATENÜBERTRAGUNGEN
PROCÉDÉ, DISPOSITIF ET SYSTÈME DE PROTECTION DE TRANSMISSION DE DONNÉES

(30) Priority: 03.12.2021 CN 202111470899
(43) Date of publication of application: 15.05.2024
(73) Proprietor: Honor Device Co., Ltd., Shenzhen, Guangdong 518040 (CN)
(72) Inventor: ZHANG, Jian, Shenzhen, Guangdong 518040 (CN)
(74) Representative: Maiwald GmbH
(86) International application number: PCT/CN2022/117619
(87) International publication number: WO 2023/098209

(56) References cited:
- CN-A- 101 686 513
- CN-A- 102 223 632
- CN-A- 109 309 918
- CN-A- 109 819 492
- US-A1- 2020 092 727
- US-A1- 2021 243 687
- "3 rd Generation Partnership Project; Technical Specification Group Services and System Aspects; Security architecture and procedures for 5G system (Release 17)", no. 20210901, 16 September 2021 (2021-09-16), XP052061996, Retrieved from the Internet <URL:https://ftp.3gpp.org/tsg_sa/WG3_Security/TSGS3_104e/SA_93e/33501-h30.doc> [retrieved on 20210916]
- INTEL CORPORATION: "Radio bearer configuration for SDT considering UE context relocation and CU/DU split", 3GPP DRAFT; R2-2006714, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic meeting; 20200817 - 20200828, 7 August 2020 (2020-08-07), Mobile Competence Centre ; 650, route des Lucioles ; F-06921 Sophia-Antipolis Cedex ; France , XP051911622

## Description

This application claims priority to Chinese Patent Application No. 202111470899.X, filed with the China National Intellectual Property Administration on December 3, 2021 and entitled "DATA TRANSMISSION PROTECTION METHOD, DEVICE, AND SYSTEM".

### TECHNICAL FIELD

Embodiments of this application relate to the field of communication technologies, and in particular, to a data transmission protection method, a device, a computer readable storage medium and a computer program product.

### BACKGROUND

Communication security has always been a concern in the field of mobile communication. To ensure privacy and integrity of data during transmission, in an implementation, a transmit end may perform encryption protection and integrity protection on the data and then transmit the data to a receive end. Encryption protection is for avoiding the data being intercepted and unlawfully obtained during transmission. Integrity protection is for performing integrity verification on the data to determine whether the data is falsified during transmission. The receive end performs decryption on received encrypted data and the received encrypted data successfully passes the integrity verification, and then a subsequent communication process may continue.

However, with increasing complexity of a network environment and continuous upgrading of a communication technology, a network device, or a terminal device, there are many problems during encryption protection and integrity protection of information transmission, for example, information is easy to falsify because of desynchrony of a security protection capability and incomplete security protection.

Chinese patent application CN 101686513 A describes a cell switching method wherein a source eNB selects a target eNB for a UE according to safety capability algorithm information of the UE and safety capability algorithm information of an eNB adjacent to the source eNB.

United States patent application US 2021/0243687 A1 describes a processing method for a security algorithm wherein a terminal performs cell search and selects a cell supporting a security algorithm as a target cell from found cells.

The article "3rd Generation Partnership Project; Technical Specification Group Services and System Aspects; Security architecture and procedures for 5G system (Release 17)" (3GPP TS 33.501 V17.3.0) describes the state transition from RRC_INACTIVE to RRC_CONNECTED to a new gNB/ng-eNB.

### SUMMARY

This application provides a data transmission protection method, a device, and a system, to simplify a security verification and integrity verification process while ensuring security and integrity during data transmission.

The invention is set out in the appended set of claims.

To achieve the foregoing objective, the following technical solutions are used in embodiments of this application.

A first aspect provides a data transmission protection method as further defined in claim 1.

In the solution provided in the first aspect, network nodes share security protection capabilities supported by the network nodes to each other, so that the security protection capabilities are synchronized between the network nodes. Based on this, when data or signaling is transmitted between the network nodes, for example, when the second node, as a serving base station of user equipment (User Equipment, UE), requests a radio resource control (radio resource control, RRC) context of the UE from an anchor base station, for example, the first node, of the UE, a security parameter (for example, an encryption algorithm, an integrity protection algorithm, a security key calculation parameter, and a key calculation parameter) matched with a security protection capability supported by the second node may be accurately selected to perform security protection on the data. Further, the second node may directly perform decryption and integrity verification based on the security parameter matched with the security protection capability supported by the second node. This not only avoids transmission of a redundant parameter, but also simplifies a decryption and integrity verification process, so that computing power for decryption and integrity verification is reduced.

In a possible implementation, the first node sends a security parameter of the first node to the second node through a communication interface setup request message. The security parameter of the first node represents the information about the security protection capability supported by the first node. A specific manner in which the network nodes share the supported security protection capabilities to each other is not limited in this application. For example, the first node may share the security protection capability supported by the first node to the second node during initial setup of a communication interface with the second node.

In a possible implementation, the method further includes: The first node receives, from the second node, information representing the security protection capability supported by the second node. To ensure synchrony of the security protection capabilities between the network nodes, the second node may also share the security protection capability supported by the second node to the first node.

In a possible implementation, the communication interface setup request message is an Xn interface setup request message (Xn Setup Request message). In this application, a specific type of the communication interface is not limited, and is determined by specific structures and functions of the first node and the second node. For example, the communication interface is an Xn interface. The first node may share the security protection capability supported by the first node to the second node during initial setup of the Xn interface with the second node.

In a possible implementation, the first node obtains, by receiving an Xn setup response message from the second node, the information representing the security protection capability supported by the second node. The specific manner in which the network nodes share the supported security protection capabilities to each other is not limited in this application. For example, the second node may share the security protection capability supported by the second node to the first node through a communication interface setup response message (Xn Setup Response message). In addition, the specific type of the communication interface is also not limited in this application, and is determined by the specific structures and functions of the first node and the second node. For example, the communication interface is the Xn interface.

In a possible implementation, the first node sends a security parameter of the first node to the second node through a configuration update message. A specific manner in which the network nodes share the supported security protection capabilities to each other is not limited in this application. For example, the first node may share the security protection capability supported by the first node to the second node through the configuration update message.

In a possible implementation, the configuration update message is a next generation radio access network node configuration update message (NG-RAN Node Configuration Update message). The method further includes: The first node receives a next generation radio access network node configuration update acknowledge message (NG-RAN Node Configuration Update Acknowledge message) from the second node. A specific configuration update message is not limited in this application. An example in which the first node and the second node are next generation radio access network (Next Generation Radio Access Network, NG-RAN) devices is used, and the configuration update message may be the NG-RAN node configuration update message.

In a possible implementation, the configuration update message is sent by the first node to the second node when there is an update of the security protection capability supported by the first node. Specific time at which the first node shares the security protection capability supported by the first node to the second node is not limited in this application. For example, the first node may share the security protection capability supported by the first node to the second node when there is the update of the security protection capability supported by the first node, to ensure real-time update of the security protection capability.

In a possible implementation, the method further includes: When there is the update of the security protection capability supported by the first node, the first node sends, to the second node, information representing a latest security protection capability supported by the first node. Based on sharing of the security protection capabilities between the network nodes, when there is an update of a security protection capability supported by a network node, the network node may further send a latest security protection capability supported by the network node to another network node for update, to ensure real-time update of the security protection capability.

In a possible implementation, the method further includes: The first node sends, to a third node, the information representing the security protection capability supported by the first node and/or the information about the security protection capability supported by the second node. In an implementation, a network node may share a security protection capability supported by the network node and/or a security protection capability supported by another network node to another network node, so that the security protection capabilities are synchronized between the network nodes.

In a possible implementation, the method further includes: The first node sends a broadcast message. The broadcast message carries the information representing the security protection capability supported by the first node and/or the information representing the security protection capability supported by the second node. The network node broadcasts the security protection capability supported by the network node and/or the security protection capability supported by the another network node, to ensure that the security protection capabilities of the network nodes are updated on a UE side in real time. Therefore, when there is a data/information transmission requirement, an appropriate security algorithm is selected to perform security protection on data/signaling.

In a possible implementation, the security parameter of the first node includes one or more of the following: an encryption algorithm supported by the first node, an integrity protection algorithm supported by the first node, a security key calculation parameter supported by the first node, and an integrity key calculation parameter supported by the first node. To ensure security and integrity during data transmission, a security parameter of the node may include an encryption algorithm and a security key calculation parameter that are used to perform security protection and an integrity protection algorithm and an integrity key calculation parameter that are used to perform integrity protection.

In a possible implementation, the security parameter of the first node includes a first index identifier. The first index identifier represents the integrity protection algorithm and the integrity key calculation parameter that are supported by the first node. Specific forms of the integrity protection algorithm and the integrity key calculation parameter are not limited in this application. For example, the integrity protection algorithm and the integrity key calculation parameter may be represented in a form of an index (index) identifier.

According to claim 1, the method further includes: The first node receives a radio resource control resume request message (RRCResumeRequest message) from the UE. The RRC resume request message includes an inactive radio network temporary identifier (Inactive Radio Network Temporary Identifier, I-RNTI), a message authentication code for integrity (Message Authentication Code for Integrity, MAC-I), and a request cause (Resume Cause). The first node determines that the anchor base station of the UE is the second node. The first node sends a retrieve UE context request message (Retrieve UE CONTEXT REQUEST message) to the second node. The retrieve UE context request message carries a cell identifier of a target cell, the I-RNTI, the MAC-I, and the request cause. Based on the foregoing solution of sharing the security protection capabilities, the UE may request the anchor base station (for example, the second node) through the serving base station (for example, the first node) to retrieve an RRC context when having an RRC connection resume requirement.

In some examples, the UE may perform security protection and integrity protection on the RRC resume request message based on the information representing the security protection capability supported by the first node and/or the information representing the security protection capability supported by the second node, which is broadcast by the first node.

In a possible implementation, the RRC resume request message and the retrieve UE context request message further carry a second index (index) identifier. The second index identifier represents an integrity protection algorithm and an integrity key calculation parameter that are used by the UE to perform security protection on the RRC resume request message. To simplify a process in which a network device performs integrity verification on a message, for example, reduce redundant transmission parameter designs and iterative security decoding attempts on an iteration network side, the UE or the first node may indicate the second node the integrity protection algorithm and the integrity key calculation parameter that are used by the UE to perform security protection on the RRC resume request message. In addition, specific representation forms of the integrity protection algorithm and the integrity key calculation parameter are not limited in this application. For example, the integrity protection algorithm and the integrity key calculation parameter may be represented in the form of an index (index) identifier.

In a possible implementation, the retrieve UE context request message includes a message body container (container). The container is encapsulated with one or more of the following information: the I-RNTI, the MAC-I, the request cause, the cell identifier, and the second index identifier. The foregoing important information is encapsulated in the container for transmission, so that security during data transmission can be further protected.

In a possible implementation, the method further includes: The first node receives a retrieve context failure message (Retrieve Context failure message) from the second node. The retrieve context failure message carries information representing a latest security protection capability supported by the second node. The first node sends a radio resource control release message (RRCRelease message) to the UE. The RRC release message carries the information representing the latest security protection capability supported by the second node, and is used by the UE to perform security protection again on the RRC resume request message based on the information about the latest security protection capability supported by the second node. Based on this, when integrity verification fails, the UE may perform integrity protection again on to-be-transmitted data based on a security protection algorithm indicated by the second node, to reinitiate a request to ensure successful integrity verification.

In a possible implementation, the method further includes: The first node receives a retrieve context failure message from the second node. The retrieve context failure message carries a failure cause (failure cause). The first node sends a radio resource control reject message (RRCReject message) to the UE. The RRC reject message carries wait time, and indicates the UE not to repeatedly send the RRC resume request message within the wait time. In this solution, when the UE frequently initiates a same request, the first node may reject the request. Alternatively, the first node may reject within preset time to respond to a same request initiated by the UE. This ensures that a network node responds with an error to a falsified message.

In a possible implementation, the method further includes: The first node receives a retrieve context failure message from the second node. The retrieve context failure message carries a failure cause. The first node sends an RRC release message to the UE. The RRC release message carries the failure cause. In the method, the UE may make a corresponding response based on a specific cause in a case of a context request failure. For example, the failure cause is that the security protection algorithm is not matched or integrity verification fails. For example, if the failure cause is that integrity verification fails, the UE speculates that the message is falsified at a high possibility. For such a request, the UE may no longer initiate the same request within the preset time, to avoid the message being falsified again when reinitiating the request.

A second aspect provides a data transmission protection method. The method includes: A second node receives, from a first node, information representing a security protection capability supported by the first node. The second node sends, to the first node, information representing a security protection capability supported by the second node.

In the solution provided in the second aspect, network nodes share security protection capabilities supported by the network nodes to each other, so that the security protection capabilities are synchronized between the network nodes. Based on this, when data or signaling is transmitted between the network nodes, for example, when the second node, as a serving base station of UE, requests an RRC context of the UE from an anchor base station, for example, the first node, of the UE, a security parameter (for example, an encryption algorithm, an integrity protection algorithm, a security key calculation parameter, and a key calculation parameter) matched with the security protection capability supported by the second node may be accurately selected to perform security protection on the data. Further, the second node may directly perform decryption and integrity verification based on the security parameter matched with the security protection capability supported by the second node. This not only avoids transmission of a redundant parameter, but also simplifies a decryption and integrity verification process, so that computing power for decryption and integrity verification is reduced.

In a possible implementation, the second node obtains a security parameter of the first node from the first node through a communication interface setup request message. The security parameter of the first node represents the information about the security protection capability supported by the first node. A specific manner in which the network nodes share the supported security protection capabilities to each other is not limited in this application. For example, the first node may share the security protection capability supported by the first node to the second node during initial setup of a communication interface with the second node.

In a possible implementation, the second node sends a security parameter of the second node to the first node through a communication interface setup response message. The security parameter of the second node represents the information about the security protection capability supported by the second node. The specific manner in which the network nodes share the supported security protection capabilities to each other is not limited in this application. For example, the second node may share the security protection capability supported by the second node to the first node during initial setup of the communication interface with the first node.

In a possible implementation, the communication interface setup request message is an Xn setup request message, and the communication interface setup response message is an Xn setup response message. In this application, a specific type of the communication interface is not limited, and is determined by specific structures and functions of the first node and the second node. For example, the communication interface is an Xn interface. The first node may share the security protection capability supported by the first node to the second node during initial setup of the Xn interface with the second node.

In a possible implementation, the second node obtains a security parameter of the first node from the first node through a configuration update message. The second node sends a security parameter of the second node to the first node through a configuration update acknowledge message.

In a possible implementation, the configuration update message is an NG-RAN node configuration update message, and the configuration update acknowledge message is an NG-RAN node configuration update acknowledge message. A specific configuration update message is not limited in this application. An example in which the first node and the second node are NG-RAN devices is used, the configuration update message may be the NG-RAN node configuration update message, and the configuration update acknowledge message may be the NG-RAN node configuration update acknowledge message.

In a possible implementation, the method further includes: When there is an update of the security protection capability supported by the second node, the second node sends, to the first node, information representing a latest security protection capability supported by the second node. Based on sharing of the security protection capabilities between the network nodes, when there is an update of a security protection capability supported by a network node, the network node may further send a latest security protection capability supported by the network node to another network node for update, to ensure real-time update of the security protection capability.

In a possible implementation, the method further includes: The second node sends, to a third node, the information representing the security protection capability supported by the first node and/or the information about the security protection capability supported by the second node. In an implementation, a network node may share a security protection capability supported by the network node and/or a security protection capability supported by another network node to another network node, so that the security protection capabilities are synchronized between the network nodes.

In a possible implementation, the method further includes: The second node sends a broadcast message. The broadcast message carries the information representing the security protection capability supported by the first node and/or the information representing the security protection capability supported by the second node. The network node broadcasts the security protection capability supported by the network node and/or the security protection capability supported by the another network node, to ensure that the security protection capabilities of the network nodes are updated on a UE side in real time. Therefore, when there is a data/information transmission requirement, an appropriate security algorithm is selected to perform security protection on data/signaling.

In a possible implementation, the security parameter of the second node includes one or more of the following information: an encryption algorithm supported by the second node, an integrity protection algorithm supported by the second node, a security key calculation parameter supported by the second node, and an integrity key calculation parameter supported by the second node. To ensure security and integrity during data transmission, a security parameter of the node may include an encryption algorithm and a security key calculation parameter that are used to perform security protection and an integrity protection algorithm and an integrity key calculation parameter that are used to perform integrity protection.

In a possible implementation, the method further includes: The second node receives a retrieve UE context request message from the first node. The retrieve UE context request message carries a cell identifier of a target cell, an I-RNTI, a MAC-I, and a request cause. The second node performs integrity verification on the retrieve UE context request message.

In some examples, the UE performs security protection and integrity protection on information carried in the retrieve UE context request message based on the information representing the security protection capability supported by the first node and/or the information representing the security protection capability supported by the second node, which is broadcast by the first node and/or the second node.

In a possible implementation, the retrieve UE context request message further carries a second index (index) identifier. The second index identifier represents an integrity protection algorithm and an integrity key calculation parameter that are used by the UE to perform security protection on the RRC resume request message. To simplify a process in which a network device performs integrity verification on a message, for example, reduce redundant transmission parameter designs and iterative security decoding attempts on an iteration network side, the UE or the first node may indicate the second node the integrity protection algorithm and the integrity key calculation parameter that are used by the UE to perform security protection on the RRC resume request message. In addition, specific representation forms of the integrity protection algorithm and the integrity key calculation parameter are not limited in this application. For example, the integrity protection algorithm and the integrity key calculation parameter may be represented in the form of an index (index) identifier.

In a possible implementation, the retrieve UE context request message includes a message body container (container). The container is encapsulated with one or more of the following information: the I-RNTI, the MAC-I, the request cause, the cell identifier, and the second index identifier. The foregoing important information is encapsulated in the container for transmission, so that security during data transmission can be further protected.

In a possible implementation, the method further includes: The second node sends a retrieve context failure message to the first node. The retrieve context failure message carries the information representing the latest security protection capability supported by the second node. Based on this, when the second node fails in integrity verification, the first node may indicate the UE to perform integrity protection again on to-be-transmitted data based on a security protection algorithm indicated by the second node, to reinitiate a request to ensure successful integrity verification.

In a possible implementation, the method further includes: The second node sends a retrieve context failure message to the first node. The retrieve context failure message carries a failure cause (failure cause). In this solution, when the UE frequently initiates a same request, the first node may reject the request. Alternatively, the first node may reject within preset time to respond to a same request initiated by the UE. This ensures that a network node responds with an error to a falsified message. Alternatively, the first node may indicate the UE to make a corresponding response based on a specific cause. For example, the failure cause is that the security protection algorithm is not matched or integrity verification fails. For example, if the failure cause is that integrity verification fails, the UE speculates that the message is falsified at a high possibility. For such a request, the UE may no longer initiate the same request within the preset time, to avoid the message being falsified again when reinitiating the request.

A third aspect provides a data transmission protection method. The method includes: A first node sends, to a second node, information representing a security protection capability supported by the first node. The second node sends, to the first node, information representing a security protection capability supported by the second node.

In the solution provided in the third aspect, network nodes share security protection capabilities supported by the network nodes to each other, so that the security protection capabilities are synchronized between the network nodes. Based on this, when data or signaling is transmitted between the network nodes, for example, when the second node, as a serving base station of UE, requests an RRC context of the UE from an anchor base station, for example, the first node, of the UE, a security parameter (for example, an encryption algorithm, an integrity protection algorithm, a security key calculation parameter, and a key calculation parameter) matched with the security protection capability supported by the second node may be accurately selected to perform security protection on the data. Further, the second node may directly perform decryption and integrity verification based on the security parameter matched with the security protection capability supported by the second node. This not only avoids transmission of a redundant parameter, but also simplifies a decryption and integrity verification process, so that computing power for decryption and integrity verification is reduced.

In a possible implementation, the method further includes: The first node sends a broadcast message. The broadcast message carries the information representing the security protection capability supported by the first node and/or the information representing the security protection capability supported by the second node. A network node broadcasts a security protection capability supported by the network node and/or a security protection capability supported by another network node, to ensure that the security protection capabilities of the network nodes are updated on a UE side in real time. Therefore, when there is a data/information transmission requirement, an appropriate security algorithm is selected to perform security protection on data/signaling.

In a possible implementation, the method further includes: The UE performs security protection on an RRC resume request message based on the information representing the security protection capability supported by the first node and the information representing the security protection capability supported by the second node. The RRC resume request message includes an I-RNTI, a MAC-I, and a request cause (Resume Cause). The UE sends the RRC resume request message to the first node. The first node determines that the anchor base station of the UE is the second node. The first node sends a retrieve UE context request message to the second node. The retrieve UE context request message carries a cell identifier of a target cell, the I-RNTI, the MAC-I, and the request cause. The second node performs integrity verification on the retrieve UE context request message based on the security protection capability supported by the second node. Based on the foregoing solution of sharing the security protection capabilities, the UE may request the anchor base station (for example, the second node) through the serving base station (for example, the first node) to retrieve an RRC context when having an RRC connection resume requirement.

In a possible implementation, the method further includes: The second node sends a retrieve context failure message to the first node. The retrieve context failure message carries information representing a latest security protection capability supported by the second node. The first node sends a radio resource control release message (RRCRelease message) to the UE. The RRC release message carries the information representing the latest security protection capability supported by the second node, and is used by the UE to perform security protection again on the RRC resume request message based on the information about the latest security protection capability supported by the second node. Based on this, when integrity verification fails, the UE may perform integrity protection again on to-be-transmitted data based on a security protection algorithm indicated by the second node, to reinitiate a request to ensure successful integrity verification.

In a possible implementation, the method further includes: The second node sends a retrieve context failure message to the first node. The retrieve context failure message carries a failure cause (failure cause). The first node sends a radio resource control reject message (RRCReject message) to the UE. The RRC reject message carries wait time, and indicates the UE not to repeatedly send the RRC resume request message within the wait time. In this solution, when the UE frequently initiates a same request, the first node may reject the request. Alternatively, the first node may reject within preset time to respond to a same request initiated by the UE. This ensures that a network node responds with an error to a falsified message.

In a possible implementation, the method further includes: The second node sends a retrieve context failure message to the first node. The retrieve context failure message carries a failure cause (failure cause). The first node sends an RRC release message to the UE. The RRC release message carries the failure cause. In the method, the UE may make a corresponding response based on a specific cause in a case of a context request failure. For example, the failure cause is that the security protection algorithm is not matched or integrity verification fails. For example, if the failure cause is that integrity verification fails, the UE speculates that the message is falsified at a high possibility. For such a request, the UE may no longer initiate the same request within the preset time, to avoid the message being falsified again when reinitiating the request.

A fourth aspect provides a first node. The first node includes a communication unit, configured to send, to a second node, information representing a security protection capability supported by the first node. The information representing the security protection capability supported by the first node is used by the second node to perform integrity verification on data from the first node.

In the solution provided in the fourth aspect, network nodes share security protection capabilities supported by the network nodes to each other, so that the security protection capabilities are synchronized between the network nodes. Based on this, when data or signaling is transmitted between the network nodes, for example, when the second node, as a serving base station of UE, requests an RRC context of the UE from an anchor base station, for example, the first node, of the UE, a security parameter (for example, an encryption algorithm, an integrity protection algorithm, a security key calculation parameter, and a key calculation parameter) matched with the security protection capability supported by the second node may be accurately selected to perform security protection on the data. Further, the second node may directly perform decryption and integrity verification based on the security parameter matched with the security protection capability supported by the second node. This not only avoids transmission of a redundant parameter, but also simplifies a decryption and integrity verification process, so that computing power for decryption and integrity verification is reduced.

In a possible implementation, the communication unit is specifically configured to send a security parameter of the first node to the second node through a communication interface setup request message. The security parameter of the first node represents the information about the security protection capability supported by the first node. A specific manner in which the network nodes share the supported security protection capabilities to each other is not limited in this application. For example, the first node may share the security protection capability supported by the first node to the second node during initial setup of a communication interface with the second node.

In a possible implementation, the communication unit is further configured to receive, from the second node, information representing the security protection capability supported by the second node. To ensure synchrony of the security protection capabilities between the network nodes, the second node may also share the security protection capability supported by the second node to the first node.

In a possible implementation, the communication interface setup request message is an Xn setup request message. In this application, a specific type of the communication interface is not limited, and is determined by specific structures and functions of the first node and the second node. For example, the communication interface is an Xn interface. The first node may share the security protection capability supported by the first node to the second node during initial setup of the Xn interface with the second node.

In a possible implementation, the communication unit is further configured to receive an Xn setup response message from the second node, to obtain the information representing the security protection capability supported by the second node. The specific manner in which the network nodes share the supported security protection capabilities to each other is not limited in this application. For example, the second node may share the security protection capability supported by the second node to the first node through the Xn setup response message. In addition, the specific type of the communication interface is also not limited in this application, and is determined by the specific structures and functions of the first node and the second node. For example, the communication interface is the Xn interface.

In a possible implementation, the communication unit is specifically configured to: when there is an update of the security protection capability supported by the first node, send, to the second node, information representing a latest security protection capability supported by the first node. Specific time at which the first node shares the security protection capability supported by the first node to the second node is not limited in this application. For example, the first node may share the security protection capability supported by the first node to the second node when there is the update of the security protection capability supported by the first node, to ensure real-time update of the security protection capability.

In a possible implementation, the communication unit is further configured to: when there is an update of the security protection capability supported by the first node, send, to the second node, information representing a latest security protection capability supported by the first node. Based on sharing of the security protection capabilities between the network nodes, when there is an update of a security protection capability supported by a network node, the network node may further send a latest security protection capability supported by the network node to another network node for update, to ensure real-time update of the security protection capability.

In a possible implementation, the communication unit is further configured to send, to a third node, the information representing the security protection capability supported by the first node and/or the information about the security protection capability supported by the second node. In an implementation, a network node may share a security protection capability supported by the network node and/or a security protection capability supported by another network node to another network node, so that the security protection capabilities are synchronized between the network nodes.

In a possible implementation, the communication unit is further configured to send a broadcast message. The broadcast message carries the information representing the security protection capability supported by the first node and/or the information representing the security protection capability supported by the second node. The network node broadcasts the security protection capability supported by the network node and/or the security protection capability supported by the another network node, to ensure that the security protection capabilities of the network nodes are updated on a UE side in real time. Therefore, when there is a data/information transmission requirement, an appropriate security algorithm is selected to perform security protection on data/signaling.

In a possible implementation, the security parameter of the first node includes one or more of the following: an encryption algorithm supported by the first node, an integrity protection algorithm supported by the first node, a security key calculation parameter supported by the first node, and an integrity key calculation parameter supported by the first node. To ensure security and integrity during data transmission, a security parameter of the node may include an encryption algorithm and a security key calculation parameter that are used to perform security protection and an integrity protection algorithm and an integrity key calculation parameter that are used to perform integrity protection.

In a possible implementation, the security parameter of the first node includes a first index identifier. The first index identifier represents the integrity protection algorithm and the integrity key calculation parameter that are supported by the first node. Specific forms of the integrity protection algorithm and the integrity key calculation parameter are not limited in this application. For example, the integrity protection algorithm and the integrity key calculation parameter may be represented in a form of an index (index) identifier.

In a possible implementation, the communication unit is further configured to receive an RRC resume request message from the UE. The RRC resume request message includes an I-RNTI, a MAC-I, and a request cause (Resume Cause). The first node determines that the anchor base station of the UE is the second node. The first node sends a retrieve UE context request message to the second node. The retrieve UE context request message carries a cell identifier of a target cell, the I-RNTI, the MAC-I, and the request cause. Based on the foregoing solution of sharing the security protection capabilities, the UE may request the anchor base station (for example, the second node) through the serving base station (for example, the first node) to retrieve an RRC context when having an RRC connection resume requirement.

In some examples, the UE may perform security protection and integrity protection on the RRC resume request message based on the information representing the security protection capability supported by the first node and/or the information representing the security protection capability supported by the second node, which is broadcast by the first node.

In a possible implementation, the RRC resume request message and the retrieve UE context request message further carry a second index (index) identifier. The second index identifier represents an integrity protection algorithm and an integrity key calculation parameter that are used by the UE to perform security protection on the RRC resume request message. To simplify a process in which a network device performs integrity verification on a message, for example, reduce redundant transmission parameter designs and iterative security decoding attempts on an iteration network side, the UE or the first node may indicate the second node the integrity protection algorithm and the integrity key calculation parameter that are used by the UE to perform security protection on the RRC resume request message. In addition, specific representation forms of the integrity protection algorithm and the integrity key calculation parameter are not limited in this application. For example, the integrity protection algorithm and the integrity key calculation parameter may be represented in the form of an index (index) identifier.

In a possible implementation, the retrieve UE context request message includes a message body container (container). The container is encapsulated with one or more of the following information: the I-RNTI, the MAC-I, the request cause, the cell identifier, and the second index identifier. The foregoing important information is encapsulated in the container for transmission, so that security during data transmission can be further protected.

In a possible implementation, the communication unit is further configured to: receive a retrieve context failure message from the second node, where the retrieve context failure message carries information representing a latest security protection capability supported by the second node; and send an RRC release message to the UE, where the RRC release message carries the information representing the latest security protection capability supported by the second node, and is used by the UE to perform security protection again on the RRC resume request message based on the information about the latest security protection capability supported by the second node. Based on this, when integrity verification fails, the UE may perform integrity protection again on to-be-transmitted data based on a security protection algorithm indicated by the second node, to reinitiate a request to ensure successful integrity verification.

In a possible implementation, the communication unit is further configured to: receive a retrieve context failure message from the second node, where the retrieve context failure message carries a failure cause (failure cause); and send an RRC reject message to the UE, where the RRC reject message carries wait time, and indicates the UE not to repeatedly send the RRC resume request message within the wait time. In this solution, when the UE frequently initiates a same request, the first node may reject the request. Alternatively, the first node may reject within preset time to respond to a same request initiated by the UE. This ensures that a network node responds with an error to a falsified message.

**In** a possible implementation, the communication unit is further configured to: receive a retrieve context failure message from the second node, where the retrieve context failure message carries a failure cause; and send an RRC release message to the UE, where the RRC release message carries the failure cause. In the method, the UE may make a corresponding response based on a specific cause in a case of a context request failure. For example, the failure cause is that the security protection algorithm is not matched or integrity verification fails. For example, if the failure cause is that integrity verification fails, the UE speculates that the message is falsified at a high possibility. For such a request, the UE may no longer initiate the same request within the preset time, to avoid the message being falsified again when reinitiating the request.

A fifth aspect provides a second node. The second node includes a communication unit, configured to: receive, from a first node, information representing a security protection capability supported by the first node; and send, to the first node, information representing a security protection capability supported by the second node.

**In** the solution provided in the fifth aspect, network nodes share security protection capabilities supported by the network nodes to each other, so that the security protection capabilities are synchronized between the network nodes. Based on this, when data or signaling is transmitted between the network nodes, for example, when the second node, as a serving base station of UE, requests an RRC context of the UE from an anchor base station, for example, the first node, of the UE, a security parameter (for example, an encryption algorithm, an integrity protection algorithm, a security key calculation parameter, and a key calculation parameter) matched with the security protection capability supported by the second node may be accurately selected to perform security protection on the data. Further, the second node may directly perform decryption and integrity verification based on the security parameter matched with the security protection capability supported by the second node. This not only avoids transmission of a redundant parameter, but also simplifies a decryption and integrity verification process, so that computing power for decryption and integrity verification is reduced.

**In** a possible implementation, the communication unit is specifically configured to obtain a security parameter of the first node from the first node through a communication interface setup request message. The security parameter of the first node represents the information about the security protection capability supported by the first node. A specific manner in which the network nodes share the supported security protection capabilities to each other is not limited in this application. For example, the first node may share the security protection capability supported by the first node to the second node during initial setup of a communication interface with the second node.

In a possible implementation, the communication unit is specifically configured to send a security parameter of the second node to the first node through a communication interface setup response message. The security parameter of the second node represents the information about the security protection capability supported by the second node. The specific manner in which the network nodes share the supported security protection capabilities to each other is not limited in this application. For example, the second node may share the security protection capability supported by the second node to the first node during initial setup of the communication interface with the first node.

In a possible implementation, the communication interface setup request message is an Xn setup request message, and the communication interface setup response message is an Xn setup response message. In this application, a specific type of the communication interface is not limited, and is determined by specific structures and functions of the first node and the second node. For example, the communication interface is an Xn interface. The first node may share the security protection capability supported by the first node to the second node during initial setup of the Xn interface with the second node.

In a possible implementation, the communication unit is specifically configured to: obtain a security parameter of the first node from the first node through a configuration update message, and send a security parameter of the second node to the first node through a configuration update acknowledge message.

In a possible implementation, the communication unit is further configured to: when there is an update of the security protection capability supported by the second node, send, to the first node, information representing a latest security protection capability supported by the second node. Based on sharing of the security protection capabilities between the network nodes, when there is an update of a security protection capability supported by a network node, the network node may further send a latest security protection capability supported by the network node to another network node for update, to ensure real-time update of the security protection capability.

In a possible implementation, the communication unit is further configured to send, to a third node, the information representing the security protection capability supported by the first node and/or the information about the security protection capability supported by the second node. In an implementation, a network node may share a security protection capability supported by the network node and/or a security protection capability supported by another network node to another network node, so that the security protection capabilities are synchronized between the network nodes.

In a possible implementation, the communication unit is specifically configured to send a broadcast message. The broadcast message carries the information representing the security protection capability supported by the first node and/or the information representing the security protection capability supported by the second node. The network node broadcasts the security protection capability supported by the network node and/or the security protection capability supported by the another network node, to ensure that the security protection capabilities of the network nodes are updated on a UE side in real time. Therefore, when there is a data/information transmission requirement, an appropriate security algorithm is selected to perform security protection on data/signaling.

In a possible implementation, the communication unit is specifically configured to receive a retrieve UE context request message from the first node. The retrieve UE context request message carries a cell identifier of a target cell, an I-RNTI, a MAC-I, and a request cause. The second node further includes a processing unit, configured to perform integrity verification on the retrieve UE context request message.

In some examples, the UE performs security protection and integrity protection on information carried in the retrieve UE context request message based on the information representing the security protection capability supported by the first node and/or the information representing the security protection capability supported by the second node, which is broadcast by the first node and/or the second node.

In a possible implementation, the communication unit is further configured to send a retrieve context failure message to the first node. The retrieve context failure message carries the information representing the latest security protection capability supported by the second node. Based on this, when the second node fails in integrity verification, the first node may indicate the UE to perform integrity protection again on to-be-transmitted data based on a security protection algorithm indicated by the second node, to reinitiate a request to ensure successful integrity verification.

In a possible implementation, the communication unit is further configured to send a retrieve context failure message to the first node. The retrieve context failure message carries a failure cause (failure cause). In this solution, when the UE frequently initiates a same request, the first node may reject the request. Alternatively, the first node may reject within preset time to respond to a same request initiated by the UE. This ensures that a network node responds with an error to a falsified message. Alternatively, the first node may indicate the UE to make a corresponding response based on a specific cause. For example, the failure cause is that the security protection algorithm is not matched or integrity verification fails. For example, if the failure cause is that integrity verification fails, the UE speculates that the message is falsified at a high possibility. For such a request, the UE may no longer initiate the same request within the preset time, to avoid the message being falsified again when reinitiating the request.

A sixth aspect provides a first node, as defined in claim 11. The first node includes: a memory, configured to store a computer program; a transceiver, configured to receive or send a radio signal; and a processor, configured to execute the computer program, so that the first node performs the method in any possible implementation of the first aspect.

A seventh aspect provides a second node. The second node includes: a memory, configured to store a computer program; a transceiver, configured to receive or send a radio signal; and a processor, configured to execute the computer program, so that the second node performs the method in any possible implementation of the first aspect.

An eighth aspect provides a communication system. The communication system includes UE, the first node in any possible implementation of the fourth aspect or the sixth aspect, and the second node in any possible implementation of the fifth aspect or the seventh aspect.

A ninth aspect provides a computer-readable storage medium according to claim 12. The computer-readable storage medium stores computer program code. When the computer program code is executed by a processor, the processor is enabled to implement the method in any possible implementation of the first aspect or the second aspect.

A tenth aspect provides a chip system. The chip system includes a processor and a memory. The memory stores computer program code. When the computer program code is executed by the processor, the processor is enabled to implement the method in any possible implementation of the first aspect or the second aspect. The chip system may include a chip, or may include a chip and another discrete device.

An eleventh aspect provides a computer program product according to claim 13. The computer program product includes computer instructions. When the computer instructions run on a computer, a computer is enabled to implement the method in any possible implementation of the first aspect or the second aspect.

### BRIEF DESCRIPTION OF DRAWINGS

FIG. 1 is a diagram of a communication network architecture according to an embodiment of this application;
FIG. 2 is a schematic diagram of a hardware structure of user equipment (User Equipment, UE) according to an embodiment of this application;
FIG. 3 is a schematic diagram of an interaction process in which UE requests to resume a radio resource control (radio resource control, RRC) connection according to an embodiment of this application;
FIG. 4 is an example diagram of two RRC resume request message formats according to an embodiment of this application;
FIG. 5A is a diagram 1 of interaction for synchronization of a security protection capability between network nodes according to an embodiment of this application;
FIG. 5B is a diagram of interaction for exchanging security protection capabilities supported by network nodes between the network nodes for synchronization during setup of an initial Xn connection according to an embodiment of this application;
FIG. 6A is a diagram 2 of interaction for synchronization of a security protection capability between network nodes according to an embodiment of this application;
FIG. 6B is a diagram of interaction for updating a supported security protection capability by a network node through an Xn interface according to an embodiment of this application;
FIG. 7 is a diagram 3 of interaction for synchronization of a security protection capability between network nodes according to an embodiment of this application;
FIG. 8 is a diagram 4 of interaction for synchronization of a security protection capability between network nodes according to an embodiment of this application;
FIG. 9 is a diagram 1 of interaction for broadcasting a security protection capability of a network node by the network node to UE according to an embodiment of this application;
FIG. 10 is a diagram 2 of interaction for broadcasting a security protection capability of a network node by the network node to UE according to an embodiment of this application;
FIG. 11 is a diagram 5 of interaction for synchronization of a security protection capability between network nodes according to an embodiment of this application;
FIG. 12 is a schematic diagram 1 of an interaction process of a data transmission protection method according to an embodiment of this application;
FIG. 13 is a schematic diagram 2 of an interaction process of a data transmission protection method according to an embodiment of this application;
FIG. 14 is a schematic diagram of information formats of two protection index (index) identifiers according to an embodiment of this application;
FIG. 15A is a schematic diagram of an information format of a protection MAC message according to an embodiment of this application;
FIG. 15B is a schematic diagram of an information format of another protection MAC message according to an embodiment of this application;
FIG. 16 is a schematic diagram 3 of an interaction process of a data transmission protection method according to an embodiment of this application;
FIG. 17 is a schematic diagram 4 of an interaction process of a data transmission protection method according to an embodiment of this application; and
FIG. 18 is a schematic diagram 5 of an interaction process of a data transmission protection method according to an embodiment of this application.

### DESCRIPTION OF EMBODIMENTS

Technical solutions in embodiments of this application are described below with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and indicates that three relationships may exist. For example, A and/or B may represent the following three cases: Only A exists, both A and B exist, and only B exists. In addition, in the descriptions of embodiments of this application, "a plurality of" represents two or more.

In the following, the terms "first" and "second" are used merely for descriptive purposes, and cannot be understood as indicating or implying relative importance or implicitly indicating the quantity of indicated technical features. Therefore, a feature limited by "first" or "second" may explicitly or implicitly include one or more such features. In the descriptions of embodiments, unless otherwise specified, "a plurality of" means two or more.

Embodiments of this application may be applied, but not limited, to the following communication systems: a narrow band-Internet of things (Narrow Band-Internet of Things, NB-IoT) system, a wireless local area network (Wireless Local Area Network, WLAN) system, a long term evolution (Long Term Evolution, LTE) system, a 5th generation (5th Generation Mobile Networks or 5th Generation Wireless Systems, 5G) system, also referred to as a new radio (New Radio, NR) system, or a communication system after 5G, for example, a 6G system, a device-to-device (Device To Device, D2D) communication system, or an Internet of vehicles.

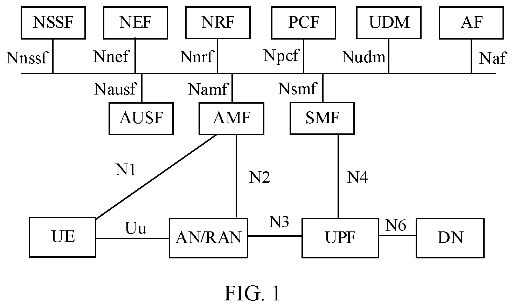

FIG. 1 is a diagram of a communication network architecture according to an embodiment of this application. FIG. 1 uses a network service architecture of a 5G system as an example to show an interaction relationship between network functions and entities and corresponding interfaces. A 3rd generation partnership project (the 3rd Generation Partnership Project, 3GPP) service-based architecture (Service-Based Architecture, SBA) of the 5G system mainly includes the following network functions and entities: user equipment (User Equipment, UE), an access network (Access Network, AN) or radio access network (Radio Access Network, RAN), a user plane function (User Plane Function, UPF), a data network (Data Network, DN), an access management function (Access Management Function, AMF), a session management function SMF, an authentication server function (Authentication Server Function, AUSF), a policy control function (Policy Control Function, PCF), an application function (Application Function, AF), a network slice selection function (Network Slice Selection Function, NSSF), unified data management (Unified Data Management, UDM), a network exposure function (Network Exposure Function, NEF), and a network repository function (Network Repository Function, NRF).

The UE, the AN/RAN, the UPF, and the DN are generally referred to as user plane network functions and entities (or user plane network elements), and the remaining parts are generally referred to as control plane network functions and entities (or control plane network elements). The processing functions of the control plane network elements in one network are defined in the 3GPP. The control plane network elements have functional behaviors defined in the 3GPP and interfaces defined in the 3GPP. A network function can be used as one network element running on dedicated hardware, a software instance running on dedicated hardware, or a virtual function instantiated on an appropriate platform, for example, implemented on cloud infrastructure.

The main functions of the network elements are described below in detail.

AN/RAN: The AN/RAN may be various forms of base stations, for example, a macro base station, a micro base station (also referred to as a "small cell"), or a distribute unit-control unit (Distribute Unit-Control Unit, DU-CU). In addition, the base station may be a radio controller in a cloud radio access network (cloud radio access network, CRAN) scenario, a relay station, an access point, an in-vehicle device, a wearable device, a network device in a future evolved public land mobile network (Public Land Mobile Network, PLMN) , or the like. Alternatively, the AN/RAN may be a broadband network service gateway (Broadband Network Gateway, BNG), a convergence switch, a non-3GPP access device, or the like. The AN/RAN is mainly responsible for functions such as radio resource management on an air interface side, uplink and downlink data classification, quality of service (Quality of Service, QoS) management, data compression and encryption, completion of signaling processing with a control plane network element or completion of data forwarding with a user plane function network element. A specific form and structure of the AN/RAN are not limited in embodiments of this application. For example, in systems using different radio access technologies, names of devices having base station functions may be different. For example, the base station may be an evolved universal terrestrial radio access network (Evolved Universal Terrestrial Radio Access Network, E-UTRAN) device such as an evolved NodeB (Evolutional NodeB, eNB or e-NodeB) in LTE, or may be a next generation radio access network (Next Generation Radio Access Network, NG-RAN) device (such as a gNB) in the 5G system.

UPF: It is mainly responsible for packet routing and forwarding, QoS processing of user plane data, charging information statistics, and the like. A transmission resource and a scheduling function for providing a service to the UE in the UPF are managed and controlled by the SMF.

DN: The DN is a network for data transmission. For example, the DN may be an operator service network, internet access, or a third-party service network.

AMF: It is mainly responsible for processing of a control plane message, for example, access control, mobility management, lawful interception, and access authentication/authorization. Specifically, the AMF mainly has functions of: (1) processing of an access network control plane; (2) processing of a NAS message for NAS encryption protection and integrity protection; (3) registration management; (4) connection management; (5) accessibility management; (6) mobility management; (7) lawful information interception; (8) provision of a session management message between the UE and the SMF; (9) transparent transmission of a session management (SM) message for routing, like a transparent transmission agent; (10) access authentication; (11) access authorization; (12) forwarding of an SMS message (short message) between the UE and an short message service function SMSF; (13) interaction with the AUSF and the UE for obtaining an intermediate key for UE authentication; and (14) calculation of a specific key for network access.

SMF: It is mainly configured for session management, Internet protocol (Internet Protocol, IP) address assignment and management of the UE, selection of a manageable user plane function, a termination point of a policy control and charging function interface, downlink data notification, and the like.

PCF: It is mainly configured to provide parameters related to a UE policy rule, an AM policy rule, and an SM policy rule to the UE, the AMF, or the SMF separately, manage user subscription information, join to the UDM to access subscriber information related to policy decision, and the like.

NRF: It is mainly configured to provide an internal/external addressing function, receive a query request for a specific type of network element from another network element, return information about a related network element, and the like.

AUSF: It is mainly responsible for network security, is configured to generate a key to implement mutual authentication of the UE, and supports a unified authentication framework.

AF: It is configured to provide a service, mainly for: (1) affecting application of service routing; (2) exposing an access network access capability; and (3) interacting with a policy framework for policy control.

NSSF: It is mainly configured to select and manage a network slice instance (Network Slice Instance, NSI), determine a mapping between allowed network slice information and used network slice information, and determine a mapping between configured network slice information and subscribed network slice information.

NEF: It is an interface network element for bidirectional information exchange between entities inside and outside a network and a logical unit that distributes and aggregates internal information, and mainly includes three capabilities: a monitoring capability, a supply capability, and a policy/charging capability.

UDM: It includes two parts, where one part is referred to as an application front end (FE), and the other part is referred to as a user data repository (UDR).

To-be-transmitted data may be transmitted through a PDU session (that is, a communication bearer mentioned in this specification) created between the UE and the DN. The to-be-transmitted data may be transmitted through the two network function entities (R)AN and UPF. The UE and the (R)AN communicate with each other by using a specific air interface technology. N1 is an interface between the UE and the AMF. N2 is an interface between the (R)AN and the AMF. N3 is an interface between the (R)AN and the UPF. N4 is an interface between the SMF and the UPF. N6 is an interface between the UPF and the DN. Namf is a service-based interface presented by the AMF. Nsmf is a service-based interface presented by the SMF. Nausf is a service-based interface presented by the AUSF. Nnssf is a service-based interface presented by the NSSF. Nnef is a service-based interface presented by the NEF. Nnrf is a service-based interface presented by the NRF. Npcf is a service-based interface presented by the PCF. Nudm is a service-based interface presented by the UDM. Naf is a service-based interface presented by the AF.

For descriptions about the functions and the like of the UPF, the DN, the AUSF, the NSSF, the NEF, the NRF, the UDM, and the other network elements, refer to explanations and descriptions in the conventional technology. Details are not described herein.

For ease of understanding, the following briefly describes some terms in this application.
1. Security key: It includes an encryption key and a decryption key. A parameter input by a transmit end when performing encryption protection on a plaintext according to an encryption algorithm to generate a ciphertext is the encryption key. A receive end may decrypt the ciphertext according to the encryption algorithm and the decryption key.

For example, in some cases, if a symmetric encryption method is used, the encryption key is the same as the decryption key, and the receive end may decrypt the ciphertext according to the same encryption algorithm and the security key.

Performing encryption protection on the plaintext is for avoiding data being intercepted and unlawfully obtained during transmission.

2. Integrity protection key: It is a parameter input by a transmit end when performing integrity protection on a plaintext or a ciphertext according to an integrity protection algorithm. A receive end may perform, according to the same integrity protection algorithm and an integrity protection key, integrity verification on data on which integrity protection is completed.

Performing integrity protection on data is for performing integrity verification on the data to determine whether the data is falsified during transmission.

3. Security algorithm: It is also referred to as an encryption algorithm, and is an algorithm used when encryption protection is performed on data. For example, the security algorithm may include an encryption algorithm and a decryption algorithm.

4. Integrity protection algorithm: It is an algorithm used when integrity protection is performed on data.

The integrity protection algorithm is, for example, an access stratum (Access Stratum, AS) integrity protection algorithm.

5. Connected (CONNECTED) state: It is also referred to as a connected status. The connected state means that a radio resource control (radio resource control, RRC) connection has been established, and thus is also referred to as RRC_CONNECTED. When the UE is in the connected state, a connection between the UE and the access network (for example, a base station) and a connection between the UE and a core network (for example, an access management function (access management function, AMF) unit) are established. When data needs to be transmitted, the data is transmitted directly through the established connections. The RRC connection is used to process a control plane message between the UE and the access network.

6. Inactive (INACTIVE) state: It is also referred to as a deactivated state (RRC_INACTIVE) or a third state. The inactive state means that an RRC connection between the UE and the access network (for example, a base station) is disabled, but a connection between the access network (for example, the base station) of the UE and a core network (for example, the AMF) remains on. When the UE is in the deactivated state, if data needs to be transmitted, the RRC connection between the UE and the access network (for example, the base station) needs to be first resumed, and then the data can be transmitted.

After the UE enters the inactive (INACTIVE) state, an RRC context (Context) of the UE is suspended (Suspend) on a terminal side and a base station side, for example, is stored in a last cell where the UE resides before entering the inactive (INACTIVE) state, or a last cell (also referred to as an anchor cell) that serves the UE. When there is a data and/or signaling transmission requirement, the UE may obtain the RRC context of the UE by initiating an RRC resume request (for example, RRCResumeRequest), to resume the RRC connection based on the RRC context. The RRC context of the UE is, for example, a security context of the UE or capability information of the UE.

7. Idle (IDLE) state: It is also referred to as an idle status (RRC_IDLE). The idle state means that no RRC connection is established between the UE and the access network (for example, a base station) and no connection is established between the access network (for example, the base station) of the UE and a core network (for example, the AMF). When the UE is in the idle state, if data needs to be transmitted, a connection between the UE and the access network (for example, the base station) and a connection between the access network (for example, the base station) of the UE and the core network (for example, the AMF) need to be first established, and then the data can be transmitted.

8. Serving base station: It is a base station to which a cell that UE currently resides in belongs, or a base station that currently serves the UE.

9. Anchor base station: It is a base station to which a last cell that UE resides in before entering the inactive (INACTIVE) state belongs, or a last base station that serves the UE.

It may be understood that in embodiments of this application, for uplink transmission, the UE may be an encryption end and an integrity protection end, and the user plane network function and entity (or the user plane network element) may be a decryption end and an integrity verification end. For downlink transmission, the user plane network function and entity (or the user plane network element) may be an encryption end and an integrity protection end, and the UE may be a decryption end and an integrity verification end.

The terms "system" and "network" used in embodiments of this application may be used interchangeably.

In embodiments of this application, the terms "base station (Base Station, BS)", "radio base station", "eNB", "gNB", "cell", "sector", "cell group", "carrier", and "component carrier" may be used interchangeably. The base station is sometimes referred to as a fixed station (fixed station), a NodeB, an eNodeB (eNB), an access point (access point), a transmission point, a reception point, a cell, a pico cell, a femto cell, a small cell, and the like. The base station may coVER one or more (for example, three) cells (also referred to as sectors). When the base station covers a plurality of cells, an entire coverage area of the base station may be divided into a plurality of smaller areas, and a communication service may also be provided in each smaller area through a base station subsystem (for example, an indoor small base station (remote radio head (Remote Radio Head, RRH))). The term "cell" or "sector" is a part or whole of coverage areas/a coverage area of a base station and/or a base station subsystem that provide/provides a communication service in this coverage.

In embodiments of this application, the terms "mobile station (Mobile Station, MS)", "user terminal (user terminal)", "user equipment (User Equipment, UE)", and "terminal" may be used interchangeably. The mobile station is sometimes referred to by a person skilled in the art as a user station, a mobile unit, a user unit, a radio unit, a remote unit, a mobile device, a wireless device, a wireless communication device, a remote device, a mobile user station, an access terminal, a mobile terminal, a wireless terminal, a remote terminal, a handheld set, a user agent, a mobile client, a client, or a plurality of other appropriate terms.

In addition, the wireless base station in embodiments of this application may be replaced with the user terminal. For example, for a structure that communication between the wireless base station and the user terminal is replaced with device-to-device (Device-to-Device, D2D) communication between a plurality of user terminals, manners/implementations of the present disclosure may also be applied. In this case, a function of the wireless base station is regarded as a function of the user terminal. In addition, the words "uplink" and "downlink" may be replaced with "side". For example, an uplink channel may be replaced with a side channel. Similarly, the user terminal in embodiments of this application may be replaced with the wireless base station. In this case, a function of the user terminal may be regarded as a function of the wireless base station.

In embodiments of this application, the UE may be a desktop device, a laptop device, a handheld device, a wearable device, a smart home device, a computing device, an in-vehicle device, or the like with a wireless connection function, for example, a netbook, a tablet computer, a smartwatch, a personal computer (Personal Computer, PC), an ultra-mobile personal computer (ultra-mobile personal computer, UMPC), a smart camera, a netbook, a personal digital assistant (personal digital assistant, PDA), a cellular phone, a cordless phone, a session initiation protocol (Session Initiation Protocol, SIP) phone, a wireless local loop (Wireless Local Loop, WLL) station, a portable multimedia player (Portable Multimedia Player, PMP), an augmented reality (Augmented Reality, AR)/virtual reality (Virtual Reality, VR) device, a wireless device on an aircraft, a wireless device on a robot, a wireless device in industrial control, a wireless device in remote medical, a wireless device in a smart grid, a wireless device in a smart city (Smart City), or a wireless terminal in a smart home. A specific type, structure, and the like of the UE are not limited in embodiments of this application.

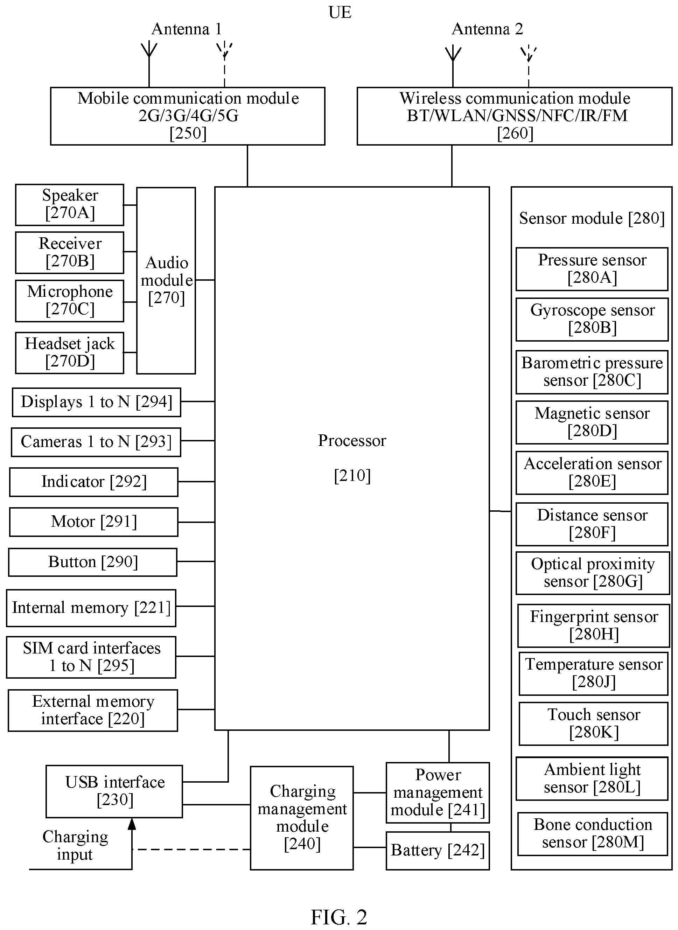

FIG. 2 is a schematic diagram of a hardware structure of the UE. As shown in FIG. 2, in some embodiments, a structure of the UE may be as shown in FIG. 2. The UE may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identification module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that the structure illustrated in this embodiment does not constitute a specific limitation on the UE. In some other embodiments, the UE may include more or fewer components than those shown in the figure, some components may be combined, some components may be split, or components are arranged in different manners. The components shown in the figure may be implemented by hardware, software, or a combination of software and hardware.

The processor 210 may include one or more processing units. For example, the processor 210 may include an application processor (application processor, AP), a modem, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate devices, or may be integrated into one or more processors.

The charging management module 240 is configured to receive a charging input from a charger. The charger may be a wireless charger or a wired charger.

The power management module 241 is configured to connect the battery 242, the charging management module 240, and the processor 210. The power management module 241 receives an input from the battery 242 and/or the charging management module 240, and supplies power to the processor 210, the internal memory 221, the display 294, the camera 293, the wireless communication module 260, and the like.

A wireless communication function of the UE may be implemented through the antenna 1, the antenna 2, the mobile communication module 250, the wireless communication module 260, the modem, the baseband processor, and the like.

The antenna 1 and the antenna 2 are configured to transmit and receive an electromagnetic wave signal. Each antenna in the UE may be configured to cover one or more communication frequency bands. Different antennas may be further multiplexed, to improve antenna utilization.

The mobile communication module 250 may provide a wireless communication solution that is applied to the UE and that includes 2G/3G/4G/5G and the like.

The wireless communication module 260 may provide a wireless communication solution that is applied to the UE and that includes a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 260 may be one or more devices that integrate at least one communication processing module. The wireless communication module 260 receives an electromagnetic wave through the antenna 2, performs frequency modulation and filtering processing on an electromagnetic wave signal, and sends a processed signal to the processor 210. The wireless communication module 260 may further receive a to-be-sent signal from the processor 210, perform frequency modulation and amplification on the to-be-sent signal, and convert the to-be-sent signal into an electromagnetic wave for radiation through the antenna 2.

In this embodiment of this application, the wireless communication module 260 may be configured for the UE to send an RRC connection resume request to a network node and receive a response message from the network node.

The UE implements a display function through the GPU, the display 294, the application processor, and the like. The GPU is a microprocessor for image processing, and connects the display 294 and the application processor.

The display 294 is configured to display an image, a video, and the like. A series of graphical user interfaces (graphical user interfaces, GUIs) may be displayed on the display 294 of the UE.

The UE may implement a photographing function through the ISP, the camera 293, the video codec, the GPU, the display 294, the application processor, and the like.

The camera 293 is configured to capture a static image or a video.

The external memory interface 220 may be configured to connect an external storage card such as a micro SD card, to extend a storage capability of the UE.

The internal memory 221 may be configured to store computer-executable program code. The executable program code includes instructions. The processor 210 runs the instructions stored in the internal memory 221, to perform various function applications and data processing of the UE.

The UE may implement an audio function such as music playing or recording through the audio module 270, the speaker 270A, the receiver 270B, the microphone 270C, the headset jack 270D, the application processor, and the like. The UE may further include the pressure sensor 280A, the barometric pressure sensor 280C, the gyroscope sensor 280B, the magnetic sensor 280D, the acceleration sensor 280E, the distance sensor 280F, the optical proximity sensor 280G, the ambient light sensor 280L, the fingerprint sensor 280H, the temperature sensor 280J, the touch sensor 280K, the bone conduction sensor 280M, the button 290, the motor 291, the indicator 292, and the like.

The SIM card interface 295 is configured to connect a SIM card. The SIM card may be inserted into the SIM card interface 295 or removed from the SIM card interface 295, to implement contact with or separation from the UE. The UE may support one or N SIM card interfaces, where N is a positive integer greater than 1. The SIM card interface 295 may support a nano-SIM card, a micro-SIM card, a SIM card, and the like. A plurality of cards may be simultaneously inserted into a same SIM card interface 295. The SIM interface 295 may also be compatible with an external memory card. The UE interacts with a network through the SIM card, to implement functions such as a call and data communication.

In addition, an operating system, for example, an iOS, an Android operating system, or a Windows operating system, runs on the foregoing components. An application may be installed and run on the operating system. In some other embodiments, there may be a plurality of operating systems running in the UE.

It should be understood that the hardware modules included in the UE shown in FIG. 2 are only examples for description, and do not constitute a limitation on a specific structure of the UE. In fact, the UE provided in embodiments of this application may further include other hardware modules having an interaction relationship with the hardware modules shown in the figure. This is not specifically limited herein. For example, the UE may further include a flash light and a micro projection apparatus. For another example, if the UE is a PC, the UE may further include components such as a keyboard and a mouse.

It may be understood that with increasing complexity of a network environment and continuous upgrading of a communication technology, a network device, or a terminal device, there are many problems during encryption protection and integrity protection of information transmission, for example, information is easy to falsify because of desynchrony of a security protection capability and incomplete security protection.

For example, after some new mechanisms (for example, a RAN slice (slice), small data transmission (Small Data Transmission), positioning (Position), or coverage enhancement) are introduced, structures of some message bodies (for example, an RRCResumeRequest message body) may be changed. In this case, how to protect integrity of a message?

For another example, for UE with different security protection capabilities, how to avoid redundant transmission parameter designs and iterative security decoding attempts on a network side, which are caused by different encrypted input parameters?

For another example, how to ensure synchronization of a security protection capability between network nodes to avoid redundant transmission parameter designs and iterative security decoding attempts on a network side? All of the foregoing problems are urgent to be considered and solved.

For another example, in some data and/or signaling transmission processes, a transmit end does not perform encryption protection or integrity protection on all to-be-transmitted data, but performs encryption protection or integrity protection on only some of the to-be-transmitted data. In this case, there is still a risk that the data is falsified during transmission.

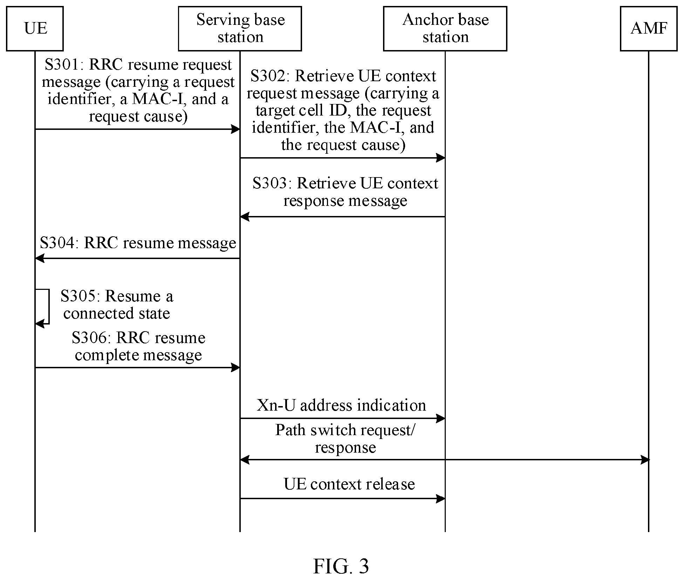

A radio resource control (Radio Resource Control, RRC) connection resume process in 5G NR is used as an example. UE in an inactive (INACTIVE) state requests a network side device to resume an RRC connection, to enter a connected (CONNECTED) state to perform data and/or signaling transmission. FIG. 3 is a schematic diagram of an interaction process in which the UE requests to resume the RRC connection according to an embodiment of this application. As shown in S301 in FIG. 3, the UE may send an RRC resume request message to a current serving base station (For example, a serving-gNB), to request for an RRC context of the UE. To ensure that the RRC resume request message is correctly recognized by the network side device, information carried in the RRC resume request message includes a resume identity (that is, a request identifier), a resume message authentication code for integrity (Message Authentication Code for Integrity, MAC-I) (or a short resume MAC-I, referred to as a MAC-I for short), and a resume cause (that is, a request cause).

The resume identity is used by the network side device to perform RRC context recognition. For example, the resume identity may be an inactive radio network temporary identifier (Inactive Radio Network Temporary Identifier, I-RNTI).

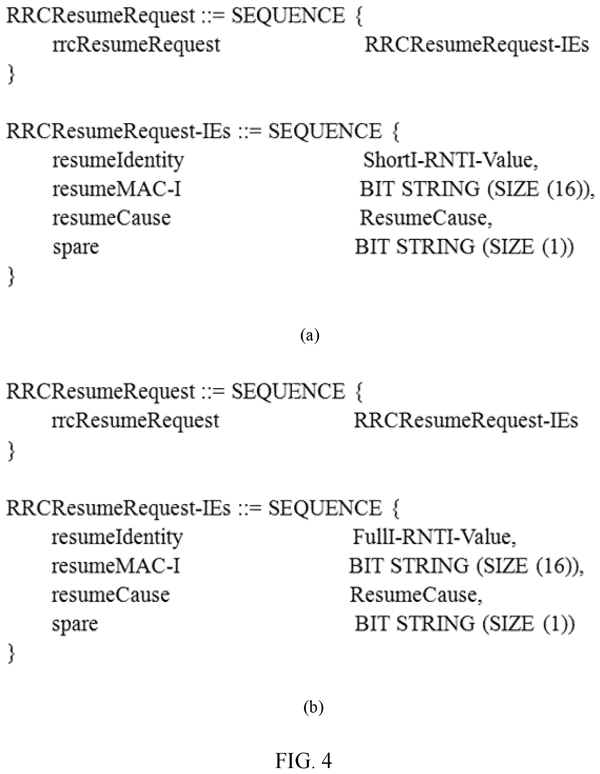

In some cases, the RRC resume request message further includes a reserved bit. For example, FIG. 4 is an example diagram of two RRC resume request message formats according to an embodiment of this application. The reserved bit is, for example, a spare bit shown in (a) in FIG. 4 or (b) in FIG. 4.

As shown in FIG. 4, the I-RNTI may include ShortI-RNTI (as shown in (a) in FIG. 4) and FullI-RNTI (as shown in (b) in FIG. 4). The I-RNTI may be configured by the network side device (for example, an anchor base station) for the UE in an RRC release message, or may be indicated by the network side device (for example, the serving base station) through useFullResumelD in a broadcast message, for example, a system information block (System Information Block, SIB) 1 message. For example, if the SIB1 message includes useFullResumeID, it indicates that the FullI-RNTI is used; or if the SIB1 message does not include useFullResumeID, it indicates that the ShortI-RNTI is used. For example, the FullI-RNTI is 40-bit, and the ShortI-RNTI is 24-bit. For example, the FullI-RNTI may include a UE ID, a gNB ID, and a public land mobile network (Public Land Mobile Network, PLMN).

The MAC-I is used by the network side device to perform message validity verification and message integrity verification. For example, the MAC-I may be obtained by the UE through calculation based on a security algorithm and an integrity protection algorithm. For example, the MAC-I may be 16-bit. In an example, the UE may obtain the MAC-I through calculation based on the following parameters: KRRCint, KEY, BEARER, DIRECTION, COUNT, and MESSAGE. KRRCint is an integrity protection key. KEY may be set to a value of KRRCint. MESSAGE may be set to VarResumeMAC-Input, where VarResumeMAC-Input may be obtained through calculation based on the following parameters: a source physical cell identifier (Physical cell identification, PCI), a target cell ID (cell-ID), and a source cell radio network temporary identifier (Cell-Radio Network Temporary Identity, C-RNTI).

In a possible implementation, the UE may send the RRC resume request message to the current serving base station (for example, the serving-gNB) through a signaling radio bearer (Signalling radio bearer, SRB), for example, an SRB0. For example, a format of the RRC resumse request message may be as shown in (a) in FIG. 4 or (b) in FIG. 4.

Further, if the serving base station (for example, the serving-gNB) is not the anchor base station (for example, an anchor-gNB) of the UE, the serving base station (for example, the serving-gNB) determines the anchor base station (for example, the anchor-gNB) of the UE based on the resume identity carried in the RRC resume request message, and requests the anchor base station (for example, the anchor-gNB) of the UE for the RRC context of the UE. As shown in S302 in FIG. 3, the serving base station (for example, the serving-gNB) sends a retrieve UE context request message (Retrieve UE CONTEXT REQUEST message) to the anchor base station (for example, the anchor-gNB) of the UE, to request for the RRC context. The retrieve UE context request message carries the target cell ID (cell-ID), as well as the resume identity, the MAC-I, and the resume cause that are from the UE.

When determining, based on the resume identity carried in the RRC resume request message, that the anchor base station of the UE is different from the serving base station, the serving base station (for example, the serving-gNB) may determine the anchor base station of the UE based on the resume identity.

Further, after receiving the retrieve UE context request message from the serving base station (for example, the serving-gNB), the anchor base station (for example, the anchor-gNB) performs message validity verification and message integrity verification by verifying the MAC-I. If the retrieve UE context request message passes validity and message integrity verification of the anchor base station (for example, the anchor-gNB), as shown in S303 in FIG. 3, the anchor base station (for example, the anchor-gNB) sends a retrieve UE context response message to the serving base station (for example, the serving-gNB). The retrieve UE context response message carries the RRC context of the UE.

Further, as shown in S304 in FIG. 3, after obtain the RRC context of the UE, the serving base station (for example, the serving-gNB) sends an RRC resume message to the UE, to resume an RRC connected (CONNECTED) state of the UE. As shown in S305 in the figure, after obtaining the RRC context of the UE, the serving base station (for example, the serving-gNB) sends an RRC resume message to the UE, to resume an RRC connected (CONNECTED) state of the UE. An RRC resume complete message is sent to the serving base station (for example, the serving-gNB), to indicate the serving base station (for example, the serving-gNB) that the UE has resumed the connected (CONNECTED) state (as shown in S306 in FIG. 3). Further, as shown in FIG. 3, after determining that the UE has resumed the connected (CONNECTED) state, the serving base station (for example, the serving-gNB) may continue to perform a subsequent working process. For example, the serving base station may perform interface address indication (Xn-U address indication) to the anchor base station, an AMF unit serving base station may switch a downlink route based on a request of the serving base station, and the anchor base station may release the RRC context of the UE and the like.

However, integrity protection is not performed on the request cause (for example, the resume cause) in a conventional RRC resume request process. As a result, if the request cause (for example, the resume cause) is falsified, the network side device may fail in verification, leading to a failure of an RRC resume request of the UE. For example, if the UE requests to resume RRC to initiate a data transmission service type, and a malicious attacker falsifies the service type in the request cause to periodic location update, the RRC resume request of the UE may fail, leading to a failure of a data transmission service that the UE is intended to initiate. Therefore, how to avoid data being falsified during transmission is a problem urgent to be considered and solved.

To ensure privacy and integrity of data during transmission in many cases in which a forward compatibility (Forward Compatibility) design of a system and the like are considered, embodiments of this application provide a data transmission protection method. In the method, a unified solution is provided, to simplify a processing process and computation for integrity verification while ensuring the privacy and the integrity of the data during transmission in many cases in which a communication technology is upgraded, a new communication mechanism is introduced, security protection capabilities of UE are different, security protection capabilities of network nodes are different, and the like.

The following specifically describes the data transmission protection method provided in embodiments of this application with reference to specific embodiments.

In some embodiments of this application, network nodes may share security protection capabilities supported by the network nodes to each other, so that synchronization of the security protection capabilities between the network nodes is ensured, and redundant parameter transmission and iterative security decoding attempts on a network side are avoided.

The network node is, for example, a base station. The base station is, for example, a macro base station, a micro base station, a DU-CU, a radio controller, a relay station, an access point, a BNG, a convergence switch, an E-UTRAN device, an eNB, or a gNB. This is not limited in this application.

In some embodiments, network nodes notify security protection capabilities supported by the network nodes to each other, so that synchronization of the security protection capabilities between the network nodes is ensured.

In a possible implementation, the network nodes (for example, a first node and a second node) may exchange the security protection capabilities supported by the network nodes with each other during setup of an initial connection.

Setup of the initial connection between the network nodes is, for example, initial setup of a communication interface between the network nodes. A type of the communication interface is determined by a specific device, and is not limited in this application. For example, a communication interface between a gNB 1 and a gNB 2 is an Xn interface.

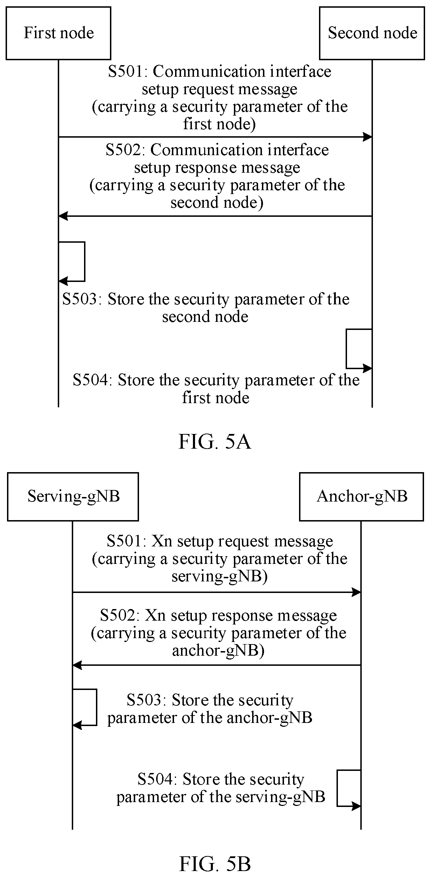

FIG. 5A is a diagram 1 of interaction for synchronization of a security protection capability between network nodes according to an embodiment of this application. As shown in FIG. 5A, a data transmission protection method provided in this embodiment of this application may be implemented based on steps S501 to S504.

S501: A first node sends a communication interface setup request message to a second node. The communication interface setup request message carries a security parameter of the first node.

The communication interface setup request message is used to request setup of a communication interface. An example in which the communication interface between the first node and the second node is an Xn interface is used. The communication interface setup request message is, for example, an Xn interface setup request message (Xn Setup Request message).

The security parameter of the first node represents a security protection capability supported by the first node.

In an example, the security parameter of the first node may include but is not limited to one or more of the following: an encryption algorithm supported by the first node, an integrity protection algorithm supported by the first node, a calculation parameter (also referred to as a security key calculation parameter) required for the encryption algorithm supported by the first node, and a calculation parameter (also referred to as an integrity key calculation parameter) required for the integrity protection algorithm supported by the first node.

In another example, the security parameter of the first node may further include an index (index) identifier. The index identifier represents the integrity protection algorithm and the integrity key calculation parameter that are currently supported by the first node.

In another example, the security parameter of the first node may further include indication information representing the security protection capability supported by the first node, for example, an information field of integrity protection supported by the first node.

S502: The second node sends a communication interface setup response message to the first node. The communication interface setup response message carries a security parameter of the second node.

The communication interface setup response message is used to notify an agreement about the setup of the communication interface. The example in which the communication interface between the first node and the second node is the Xn interface is used. The communication interface setup request message is, for example, an Xn interface setup response message (Xn Setup Response message).

The security parameter of the second node represents a security protection capability supported by the second node.

In an example, the security parameter of the second node may include but is not limited to one or more of the following: an encryption algorithm supported by the second node, an integrity protection algorithm supported by the second node, a calculation parameter (also referred to as a security key calculation parameter) required for the encryption algorithm supported by the second node, and a calculation parameter (also referred to as an integrity key calculation parameter) required for the integrity protection algorithm supported by the second node.

In another example, the security parameter of the second node may further include an index (index) identifier. The index identifier represents the integrity protection algorithm and the integrity key calculation parameter that are currently supported by the second node.

In another example, the security parameter of the second node may further include indication information representing the security protection capability supported by the second node, for example, an information field of integrity protection supported by the second node.

S503: The first node stores the security parameter of the second node.

S504: The second node stores the security parameter of the first node.

The first node and the second node may store the security parameter of each other for, but not limited to, one or more of the following: making a reference during subsequent decryption and integrity verification, sharing to another network node, and sharing to UE.

An example in which the first node is a serving-gNB of the UE, the second node is an anchor-gNB of the UE, and the communication interface setup request message is the Xn setup request message is used. The serving-gNB and the anchor-gNB may exchange security protection capabilities respectively supported by the serving-gNB and the anchor-gNB with each other during setup of an initial Xn connection. FIG. 5B is a diagram of interaction for exchanging the security protection capabilities supported by the network nodes between the network nodes for synchronization during setup of an initial Xn connection according to an embodiment of this application. As shown in FIG. 5B, the serving-gNB and the anchor-gNB may obtain the security protection capability of each other through S501 to S504. S501 to S504 are specifically as follows.

S501: The serving-gNB sends an Xn setup request message to the anchor-gNB. The Xn setup request message carries a security parameter of the serving-gNB.

S502: The anchor-gNB sends an Xn setup response message to the serving-gNB. The Xn setup response message carries a security parameter of the anchor-gNB.

S503: The serving-gNB stores the security parameter of the anchor-gNB.

S504: The anchor-gNB stores the security parameter of the serving-gNB.

It should be noted that in this application, FIG. 5A and FIG. 5B are merely examples of the network nodes notifying the security protection capabilities respectively supported by the network nodes to each other, and do not constitute a limitation on a specific time sequence relationship between the steps. For example, S504 may be performed simultaneously with S502 or S503, or may be performed before S502.

It may be understood that in a case of desynchrony of the security protection capabilities between the first node and the second node, when data or signaling is transmitted between the first node and the second node, for example, when the first node, as a serving base station of the UE, requests an RRC context of the UE from an anchor base station, for example, the second node, of the UE, the first node may send all security parameters (for example, the encryption algorithm, the integrity protection algorithm, the security key calculation parameter, and the key calculation parameter) supported by the first node to the second node. In this case, excessive redundant parameter transmission may cause a waste of a communication resource and an increase of a transmission delay. In addition, due to excessive redundant parameters, the second node needs to continuously make iterative attempts when performing decryption and integrity verification, leading to complexity of a processing process performed by the second node and a waste of computing power.

Based on the method provided in this embodiment of this application, after the first node and the second node exchange the security protection capabilities respectively supported by the first node and the second node with each other, the security protection capabilities may be synchronized between the first node and the second node. Based on this, when the data or signaling is transmitted between the first node and the second node, for example, when the first node, as the serving base station of the UE, requests the RRC context of the UE from the anchor base station, for example, the second node, of the UE, the security parameter (for example, the encryption algorithm, the integrity protection algorithm, the security key calculation parameter, and the key calculation parameter) matched with the security protection capability supported by the second node may be accurately selected to perform security protection on the data. Further, the second node may directly perform decryption and integrity verification based on the security parameter matched with the security protection capability supported by the second node. This not only avoids transmission of a redundant parameter, but also simplifies a decryption and integrity verification process, so that computing power for decryption and integrity verification is reduced.

In another possible implementation, when there is an update of a security protection capability supported by a network node (for example, the first node), the network node may update the security protection capability supported by the network node to another network node (including the second node).

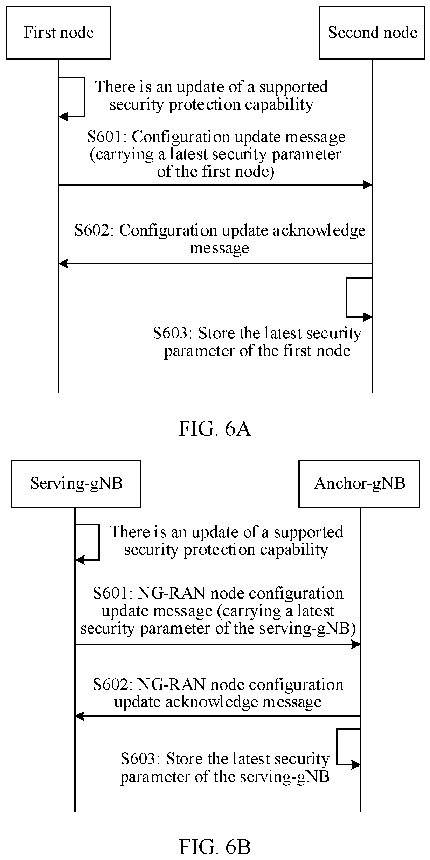

As shown in FIG. 6A, a data transmission protection method provided in this embodiment of this application may be implemented based on steps S601 to S603.

S601: When there is an update of a security protection capability supported by a first node, the first node sends a configuration update message to a second node. The configuration update message carries a latest security parameter of the first node.

The latest security parameter of the first node represents a latest security protection capability supported by the first node. The latest security parameter of the first node is a security parameter corresponding to an updated security protection capability supported by the first node.

In this embodiment of this application, that there is the update of the security protection capability may include but is not limited to addition/deletion/modification of a security algorithm (for example, an encryption algorithm and an integrity protection algorithm), a security key calculation parameter, or a key calculation parameter due to reasons such as an update of an application layer configuration between the network nodes.

In this embodiment of this application, the latest security parameter of the first node may include but is not limited to one or more of the following: a latest encryption algorithm supported by the first node, a latest integrity protection algorithm supported by the first node, an updated security key calculation parameter of the first node, and an updated integrity key calculation parameter of the first node.

In another example, the security parameter of the first node may further include an index (index) identifier. The index identifier represents the latest integrity protection algorithm and the latest integrity key calculation parameter that are supported by the first node.

In another example, the security parameter of the first node may further include indication information representing the latest security protection capability supported by the first node, for example, an information field of latest integrity protection supported by the first node.

In an example, in this embodiment of this application, a communication interface has been set up between the first node and the second node. An example in which the first node and the second node are NG-RANs and the communication interface between the first node and the second node is an Xn interface is used. The first node may send the configuration update message, for example, an NG-RAN node configuration update message (NG-RAN Node Configuration Update message), to the second node through the Xn interface.

S602: The second node sends a configuration update acknowledge message to the first node.

The configuration update acknowledge message is used to acknowledge reception of the latest security parameter of the first node from the first node. An example in which the first node and the second node are NG-RANs is used, and the configuration update acknowledge message is, for example, the NG-RAN node configuration update acknowledge message (NG-RAN Node Configuration Update Acknowledge message).

S603: The second node stores the latest security parameter of the first node.

The second node may store the latest security parameter of the first node for, but not limited to, one or more of the following: making a reference during subsequent decryption and integrity verification, sharing to another network node, and sharing to UE.

An example in which the first node is a serving-gNB of the UE and the second node is an anchor-gNB of the UE is used. FIG. 6B is a diagram of interaction for updating a supported security protection capability by a network node through an Xn interface according to an embodiment of this application. As shown in FIG. 6B, when there is an update of a security protection capability supported by the serving-gNB, the serving-gNB may indicate, through S601 to S603, the anchor-gNB to update the security protection capability supported by the serving-gNB. S601 to S603 are specifically as follows.

S601: When there is the update of the security protection capability supported by the serving-gNB, the serving-gNB sends an NG-RAN node configuration update message to the anchor-gNB. The NG-RAN node configuration update message carries a latest security parameter of the serving-gNB.

S602: The anchor-gNB sends an NG-RAN node configuration update acknowledge message to the serving-gNB.

S603: The anchor-gNB stores the latest security parameter of the serving-gNB.

It should be noted that in this application, FIG. 6A and FIG. 6B are merely examples of updating the supported security protection capability between the network nodes, and do not constitute a limitation on a specific time sequence relationship between the steps. For example, S603 shown in FIG. 6A or FIG. 6B may be performed before S602, or may be performed simultaneously with S602.

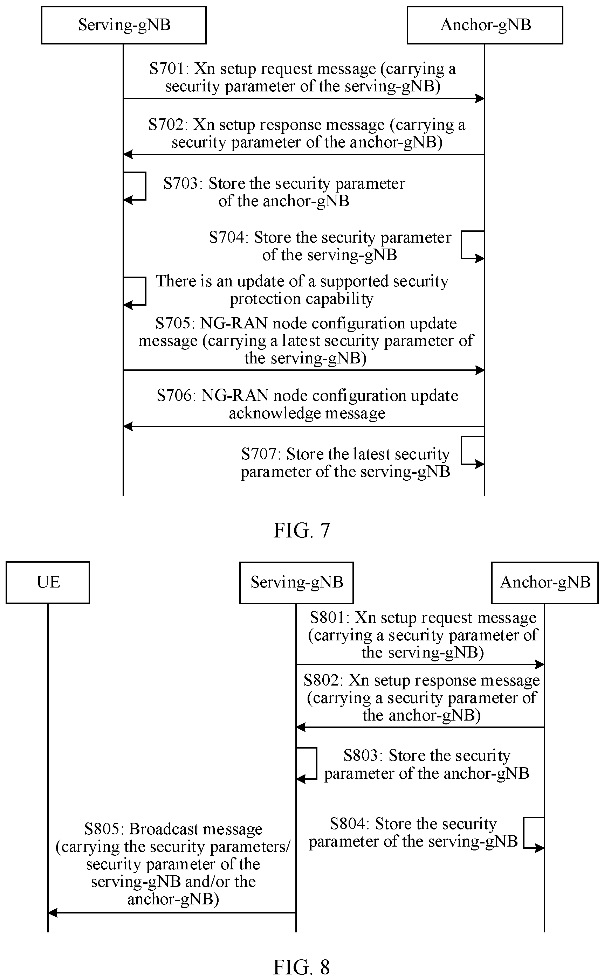

It should be noted that the method shown in FIG. 6B may alternatively be performed based on the method shown in FIG. 5B. After the serving-gNB and the anchor-gNB exchange the security protection capabilities respectively supported by the serving-gNB and the anchor-gNB with each other during setup of an initial Xn connection, if there is the update of the security protection capability supported by the serving-gNB, the serving-gNB updates the security protection capability supported by the serving-gNB to another network node (including the anchor-gNB). FIG. 7 is a diagram 3 of interaction for synchronization of the security protection capability between the network nodes according to an embodiment of this application. As shown in FIG. 7, a data transmission protection method provided in this embodiment of this application may be implemented based on steps S701 to S707. S701 to S704 are similar to S501 to S504 in FIG. 5B, and S705 to S707 are similar to S601 to S603 in FIG. 6B.

In some embodiments, the network node may alternatively multicast the security protection capability supported by the network node to a multicast domain through a multicast message. The multicast message is, for example, a broadcast message (for example, a SIB message), and the multicast domain is, for example, a broadcast domain. Alternatively, the multicast message is, for example, a groupcast message, and the multicast domain is, for example, a groupcast domain.

In an example, the network node may update the security protection capability supported by the network node to user equipment in the multicast domain.

For example, the network node may update the security protection capability supported by the network node to user equipment in the broadcast domain based on the method shown in FIG. 5A. For example, the user equipment in the broadcast domain resides in a cell of the network node. An example in which the first node is the serving-gNB of the UE and the second node is the anchor-gNB of the UE is used. FIG. 8 is a diagram 4 of interaction for synchronization of a security protection capability between network nodes according to an embodiment of this application. As shown in FIG. 8, a data transmission protection method provided in this embodiment of this application may alternatively be implemented based on steps S801 to S805. S801 to S804 are similar to S501 to S504 in FIG. 5B. S805 is as follows.

S805: A serving-gNB sends a broadcast message. Accordingly, UE receives the broadcast message from the serving-gNB. The broadcast message carries security parameters/a security parameter of the serving-gNB and/or an anchor-gNB.

For example, the serving-gNB may send the broadcast message to all UE residing in a cell of the serving-gNB.

For example, the broadcast message is a SIB message.

The security parameters/security parameter of the serving-gNB (that is, a first node) and/or the anchor-gNB (that is, a second node) carried in the broadcast message are/is used by the UE to learn of security protection capabilities/a security protection capability supported by the first node and/or the second node, when subsequently necessary, to enable a matching encryption capability and a matching integrity protection capability.

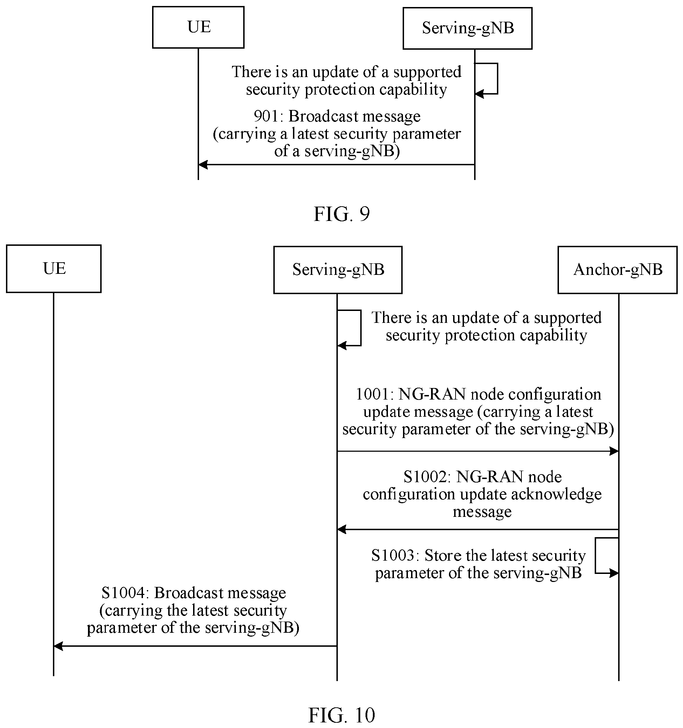

In an example, when there is an update of the security protection capability supported by the network node, the network node may update the security protection capability supported by the network node to the multicast domain. An example in which the first node is the serving-gNB of the UE is used. FIG. 9 is a diagram 1 of interaction for broadcasting the security protection capability of the network node by the network node to the UE according to an embodiment of this application. As shown in S901 in FIG. 9, when there is an update of the security protection capability supported by the serving-gNB of the UE, the serving-gNB broadcasts a latest security parameter of the serving-gNB to the UE through a broadcast message. For another example, the first node may update the security protection capability supported by the first node to user equipment in the multicast domain based on the method shown in FIG. 6B. An example in which the first node is the serving-gNB of the UE and the second node is the anchor-gNB of the UE is used. FIG. 10 is a diagram 2 of interaction for broadcasting the security protection capability of the network node by the network node to the UE according to an embodiment of this application. As shown in FIG. 10, the data transmission protection method provided in this embodiment of this application may alternatively be implemented based on steps S1001 to S1004. S1001 to S1003 are similar to S601 to S603 in FIG. 6B. S 1004 is as follows.

S1004: The serving-gNB of the UE sends a broadcast message to the UE. The broadcast message carries a latest security parameter of the serving-gNB.

It may be understood that based on the method provided in this embodiment of this application, when there is the update of the security protection capability supported by the network node, the network node broadcasts the latest security protection capability supported by the network node, to ensure that the security protection capability of the network node is updated on a UE side in real time. Therefore, when there is a data/information transmission requirement, an appropriate security algorithm is selected to perform security protection on data/signaling.

In some embodiments, the network node (for example, a first node) may also share the security protection capability supported by the network node and/or a security protection capability supported by another network node to another network node (for example, a third node).

For example, when sharing the security protection capability supported by the network node to another network node (for example, the third node), the network node (for example, a second node) sends locally stored security protection capabilities supported by one or more network nodes (for example, the first node) together to the another network node (for example, the third node).

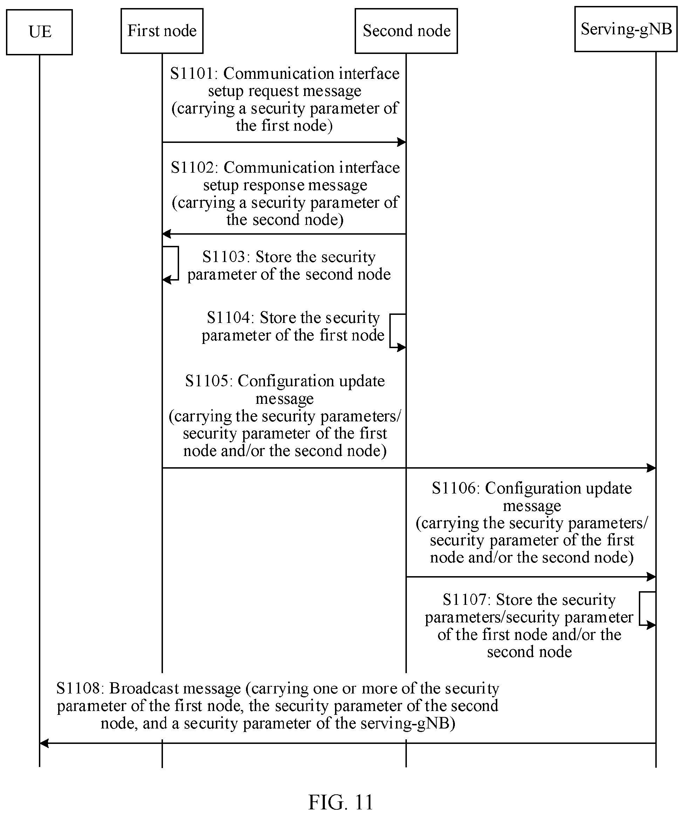

For example, the first node and/or the second node may share, based on the method shown in FIG. 5A through a configuration update message, security protection capabilities/a security protection capability supported by the first node and/or the second node and/or a security protection capability supported by another network node to the third node. An example in which the third node is a serving-gNB of UE is used. FIG. 11 is a diagram 5 of interaction for synchronization of the security protection capability between the network nodes according to an embodiment of this application. As shown in FIG. 11, the data transmission protection method provided in this embodiment of this application may alternatively be implemented based on steps S1101 to S1104, S1105 and/or S1106, and S1107. S1101 to S1104 are similar to S501 to S504 in FIG. 5A. S1105 to S1107 are as follows.

S1105: The first node sends a configuration update message to the serving-gNB. The configuration update message carries security parameters/a security parameter of the first node and/or the second node.

S1106: The second node sends a configuration update message to the serving-gNB. The configuration update message carries the security parameters/security parameter of the first node and/or the second node.

S1107: The serving-gNB stores the security parameters/security parameter of the first node and/or the second node.

It may be understood that based on the method provided in this embodiment of this application, the network nodes share the security protection capabilities supported by the network nodes or other network nodes to each other, so that synchronization of the security protection capabilities between the network nodes is ensured. Based on this, a decryption and integrity verification process may be more conveniently and accurately performed during data or signaling transmission.

Further, as shown in S1108 in FIG. 11, the serving-gNB may further send a broadcast message to UE residing in a cell of the serving-gNB. The broadcast message carries one or more of the following: the security parameter of the first node, the security parameter of the second node, or a security parameter of the serving-gNB.

It may be understood that in embodiments of this application, UE may select an appropriate security algorithm to perform security protection on data/signaling when having a data/information transmission requirement. Particularly, in some important messages for resuming a connection, for example, an RRC resume request message for resuming an RRC connection, a more perfect mechanism is needed to ensure secure and reliable transmission of the message.

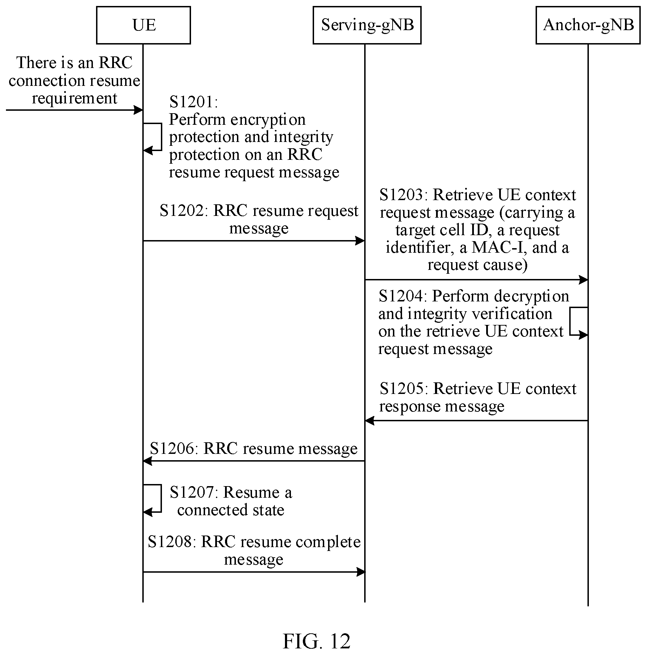

An RRC connection resume process in 5G NR is used as an example. It is assumed that a first node is a serving base station of the UE and a second node is an anchor base station of the UE. As shown in FIG. 12, when the UE in an inactive (INACTIVE) state has an RRC connection resume requirement, the following S1201 to S1204 may be performed.

S1201: The UE performs encryption protection and integrity protection on an RRC resume request message.

In some embodiments, the UE may perform encryption protection and integrity protection on the RRC resume request message based on an AS encryption algorithm and an integrity protection algorithm in an AS security context stored in the UE. The encryption algorithm and the integrity protection algorithm in the AS security context may be determined through negotiation after AS security is set up between the UE and a network node (for example, the anchor base station of the UE, that is, the second node).

In some embodiments, if the UE obtains a security parameter of the second node by reading a broadcast message (for example, a SIB message), the UE may select a security protection algorithm based on the security parameter of the second node, to perform encryption protection and integrity protection on the RRC resume request message.

It may be understood that even though the AS security context stored in the UE includes a security parameter selection security protection algorithm determined by the UE and the second node before through negotiation, because a security protection capability of the network node may change, if the UE obtains the security parameter of the second node through the broadcast message, the UE may select the security protection algorithm based on the security parameter carried in the broadcast message.

For example, if the UE has configured an integrity protection parameter (including the integrity protection algorithm and an integrity key calculation parameter) in an RRC_Release message, and the integrity protection parameter is consistent with an integrity protection parameter in the security parameter carried in the received broadcast message, the UE may perform encryption protection and integrity protection on the RRC resume request message in such case by using the integrity protection parameter configured in the RRC_Release message.

If the UE has configured an integrity protection parameter (including the integrity protection algorithm and an integrity key calculation parameter) in an RRC_Release message, but the integrity protection parameter is inconsistent with an integrity protection parameter in the security parameter carried in the received broadcast message, in such case, if the UE can support a security protection capability indicated by the broadcast message, the UE may perform encryption protection and integrity protection on the RRC resume request message by using the integrity protection parameter in the security parameter carried in the broadcast message.

If the UE does not configure an integrity protection parameter (including the integrity protection algorithm and an integrity key calculation parameter) in an RRC_Release message, but the UE can support a security protection capability indicated by the broadcast message, the UE may perform encryption protection and integrity protection on the RRC resume request message by using an integrity protection parameter in the security parameter carried in the broadcast message.

If the UE does not configure an integrity protection parameter (including the integrity protection algorithm and an integrity key calculation parameter) in an RRC_Release message, and the UE does not support a security protection capability indicated by the broadcast message, the UE may perform encryption protection and integrity protection on the RRC resume request message by using a default integrity protection parameter. The default integrity protection parameter is, for example, a latest integrity protection parameter used by the UE. This is not limited in this embodiment of this application.

The RRC_Release message is sent by the anchor base station of the UE to the UE when the UE enters an inactive (INACTIVE) state from a connected (CONNECTED) state.

In some other embodiments, if the UE does not know a security protection capability supported by the second node, but the UE has configured an integrity protection parameter (including the integrity protection algorithm and an integrity key calculation parameter) in an RRC_Release message, the UE may perform encryption protection and integrity protection on the RRC resume request message by using the integrity protection parameter configured in the RRC_Release message.

In some other embodiments, if the UE does not know a security protection capability supported by the second node, and the UE does not configure an integrity protection parameter in an RRC_Release message, the UE may perform encryption protection and integrity protection on the RRC resume request message by using a default integrity protection parameter.

S1202: The UE sends the RRC resume request message to a serving-gNB (that is, the first node).

The UE has performed encryption protection and integrity protection on the RRC resume request message. Information carried in the RRC resume request message includes a resume identity (for example, an I-RNTI), a MAC-I, and a resume cause.

In some embodiments of this application, to prevent the resume cause carried in the RRC resume request message from being falsified, the MAC-I carried in the RRC resume request message may be an enhanced MAC-I. The enhanced MAC-I is used by a network side device to perform message validity verification and message integrity verification. The enhanced MAC-I is correlated with the resume cause.

In an example, in this embodiment of this application, the enhanced MAC-I may be obtained through calculation based on the following parameters: KRRCint, KEY, BEARER, DIRECTION, COUNT, and enhanced MESSAGE. KRRCint is an integrity protection key. KEY may be set to a value of KRRCint. All of BEARER, DIRECTION, and COUNT may be set to 1. Enhanced MESSAGE is, for example, enhanced VarResumeMAC-Input. Enhanced VarResumeMAC-Input may be obtained through calculation based on the following parameters: a source PCI, a target cell ID (cell-ID), a C-RNTI of a source cell, and a resume cause value. Using the resume cause value as a parameter for calculation of the MAC-I can effectively protect the resume cause, to prevent the resume cause from being maliciously falsified.

In some embodiments of this application, the resume cause value may be explicitly defined.

For example, in some embodiments, the resume cause value may be indicated through a reserved bit of the resume cause (for example, the resume cause further includes five reserved bits now).

For another example, in some embodiments, a new parameter may be extended to indicate the resume cause value. For example, a message format after extension of the new parameter may be shown as follows:
ResumeCause :: =ENUMERATED {emergency, highPriority Access, mt-Access, mo-Signalling, mo-Data, mo-VoiceCall, mo-VideoCall, mo-SMS, MO-SDT, rna-Update, mps-PriorityAccess, mcs-PriorityAccess, spare1, spare2, spare3, spare4, spare5}.

In the example, MO-SDT (Mobile Originating-Small Data Transmission) indicates that the resume cause is small data transmission.

For another example, a message format after extension of the new parameter may be shown as follows:
ResumeCause :: =ENUMERATED {emergency, highPriority Access, mt-Access, mo-Signalling, mo-Data, mo-VoiceCall, mo-VideoCall, mo-SMS, Slicing, rna-Update, mps-PriorityAccess, mcs-PriorityAccess, spare1, spare2, spare3, spare4, spare5}.

In the example, Slicing indicates that the resume cause is a slice service.

For another example, in some embodiments, a message body may be extended to indicate the resume cause value. For example, an extended message body may be in the following format: For example, indication information indicating that the UE has completed measurement and the like are carried, and room is reserved for extension of the message body, to facilitate subsequent extension.

For example, an extended message body may be shown as follows:

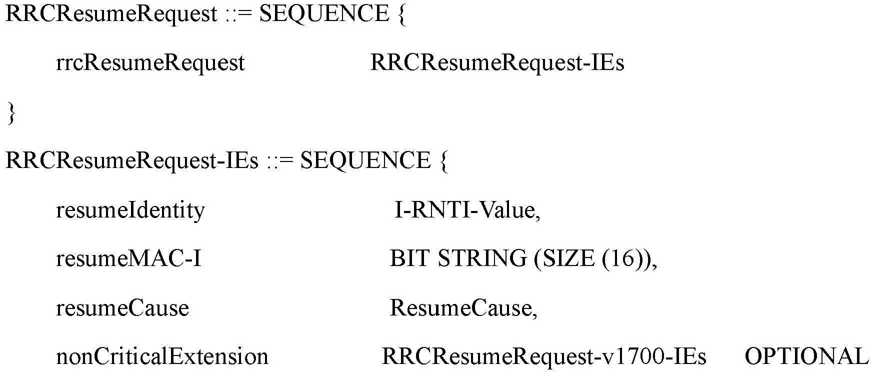

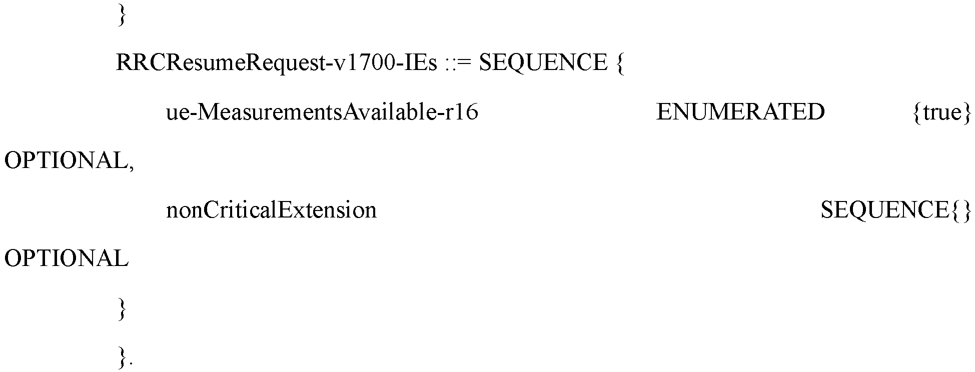

In the message body, nonCriticalExtension carries, through a reserved bit (for example, a spare bit shown in (a) in FIG. 4 or (b) in FIG. 4) of an RRC resume request message body, the indication information indicating that the UE has completed measurement.

In some embodiments of this application, the resume cause value may be implicitly defined.

For example, for some services such as a RAN slice (slice) service and a small data transmission (Small Data Transmission) service, the resume cause value may be implicitly indicated through division of a random access channel (Random Access Channel, RACH) resource. For example, if the resume cause value is "0001", it indicates that the resume cause is initiation of the small data transmission service.

It should be noted that in this embodiment of this application, the enhanced MAC-I, enhanced MESSAGE, and enhanced VarResumeMAC-Input are merely for distinguishing from a conventional MAC-I, conventional MESSAGE, and conventional VarResumeMAC-Input. A specific name is not limited in this application, and may be determined according to a specific naming rule.

When determining, based on the resume identity (for example, the I-RNTI) carried in the RRC resume request message, that the anchor base station of the UE is different from the serving base station, the serving-gNB may determine the anchor base station of the UE based on the resume identity. If the anchor base station of the UE is the second node, the serving-gNB performs the following S1203.

S1203: The serving-gNB (that is, the first node) sends a retrieve UE context request message to an anchor-gNB (that is, the second node).

The retrieve UE context request message is used to request for an RRC context of the UE. The retrieve UE context request message carries the target cell ID (cell-ID), as well as the resume identity (for example, the I-RNTI), the MAC-I, and the resume cause that are from the UE.

In some embodiments, if the RRC resume request message received by the serving-gNB from the UE carries an index identifier representing the integrity protection algorithm and the integrity key calculation parameter that are used for the RRC resume request message sent by the UE, the serving-gNB may send, to the anchor-gNB, the integrity protection algorithm and the integrity key calculation parameter that are used by the UE, so that the anchor-gNB performs integrity verification based on the integrity protection algorithm and the integrity key calculation parameter that are used by the UE.

For example, the serving-gNB may carry, in the retrieve UE context request message, the integrity protection algorithm and the integrity key calculation parameter that are used by the UE. For another example, the serving-gNB may carry the index identifier in the retrieve UE context request message.

In some embodiments, the MAC-I carried in the retrieve UE context request message is, for example, the enhanced MAC-I.

In some embodiments, to further protect security of information such as the integrity protection algorithm and the integrity key calculation parameter that are carried in the retrieve UE context request message and that are used by the UE, a security transmission mechanism such as a message body container (Container) may be used to encapsulate to-be-carried information for sending to the anchor-gNB through the retrieve UE context request message.

The message body container (Container) may be encapsulated with, but not limited to, one or more of the following parameters: the resume identity (for example, the I-RNTI), the MAC-I, the resume cause, the integrity protection algorithm used by the UE, and the integrity key calculation parameter used by the UE.

S1204: The anchor-gNB (that is, the second node) performs decryption and integrity verification on the retrieve UE context request message.

In some embodiments, if the retrieve UE context request message carries the enhanced MAC-I, when performing integrity verification, the anchor-gNB may calculate the MAC-I based on the source PCI, the target cell ID (cell-ID), the C-RNTI of the source cell, and the resume cause value, to verify whether the MAC-I is consistent with the enhanced MAC-I carried in the retrieve UE context request message. For example, if the calculated MAC-I is consistent with the enhanced MAC-I, integrity verification succeeds; or if the calculated MAC-I is inconsistent with the enhanced MAC-I, integrity verification fails.

In some embodiments, if the anchor-gNB obtains, from the serving-gNB, the integrity protection algorithm and the integrity key calculation parameter that are used by the UE, for example, if the retrieve UE context request message received by the anchor-gNB from the serving-gNB carries the integrity protection algorithm and the integrity key calculation parameter (for example, the index identifier) that are used by the UE, the anchor-gNB may perform integrity verification on the information carried in the retrieve UE context request message by using the integrity protection algorithm and the integrity key calculation parameter that are matched with the UE.

If the retrieve UE context request message passes integrity verification of the anchor-gNB, the anchor-gNB performs S1205, the serving-gNB performs S1206, and the UE performs S1207.

S1205: The anchor-gNB (that is, the second node) sends a retrieve UE context response message to the serving-gNB (that is, the first node).

The retrieve UE context response message carries the RRC context of the UE.

S1206: The serving-gNB (that is, the first node) sends an RRC resume message to the UE.

The RRC resume message indicates the RRC connected (CONNECTED) state of the UE to be resumed.

S1207: The UE resumes the connected (CONNECTED) state.

Further, as shown in S1208 in FIG. 12, after the UE resumes the connected (CONNECTED) state, the UE may further send an RRC resume complete message to the serving-gNB, to indicate the serving-gNB that the UE has resumed the connected (CONNECTED) state.

Further, after the UE resumes the connected (CONNECTED) state, the network node (for example, the serving-gNB, the anchor-gNB, or an AMF unit) may continue a subsequent working process. For example, the serving-gNB may perform interface address indication (Xn-U address indication) to the anchor base station, the AMF unit may switch a downlink route based on a request of the serving-gNB, and the anchor-gNB may release the RRC context of the UE.

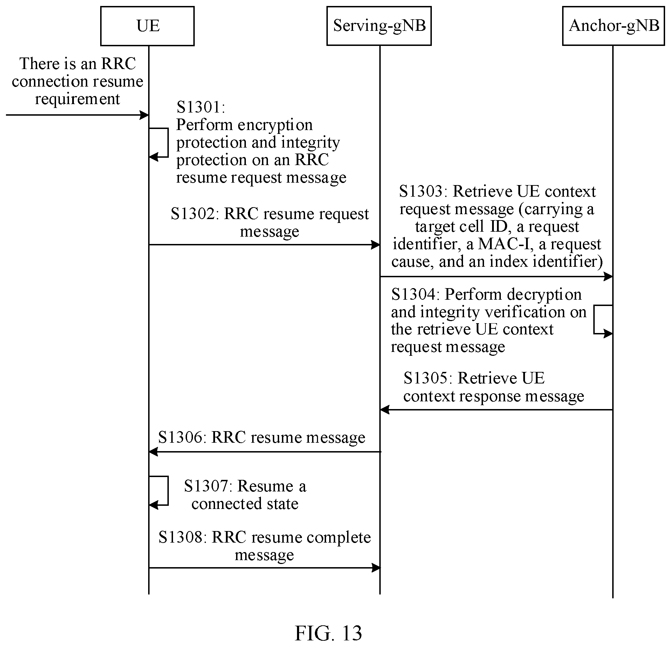

FIG. 13 is a schematic diagram 2 of an interaction process of the data transmission protection method according to an embodiment of this application. As shown in FIG. 13, the data transmission protection method provided in this embodiment of this application may also be implemented based on step S1301 to S1308. S1301 to S1308 are similar to S1201 to S1208 in FIG. 12. As shown in FIG. 13, an RRC resume request message sent by a serving-gNB to an anchor-gNB further carries an index (index) identifier. The index identifier represents an integrity protection algorithm and an integrity key calculation parameter that are used for the RRC resume request message sent by the UE.

For example, if the UE performs integrity protection on the RRC resume request message by using an encryption integrity algorithm (Encryption Integrity Algorithm, EIA), the security key calculation parameter includes a cause for which the UE requests to resume the RRC connection, and the UE may carry an index 1 in the RRC resume request message, to notify the serving-gNB of the integrity protection algorithm and the integrity key calculation parameter that are used by the UE. For another example, if the UE performs integrity protection on the RRC resume request message by using an integrity protection algorithm for 5G NR (Integrity Algorithm for NR, NIA), the security key calculation parameter includes a new service type to be initiated by the UE, and the UE may carry an index 2 in the RRC resume request message, to notify the serving-gNB of the integrity protection algorithm and the integrity key calculation parameter that are used by the UE.

In an example, the UE may carry the index identifier at a reserved bit of the RRC resume request message.

In another example, the UE may carry the index identifier in an extended RRC resume request message body.

For example, when the UE carries the index identifier in the extended RRC resume request message body, the extended RRC resume request message body may be in the following format:

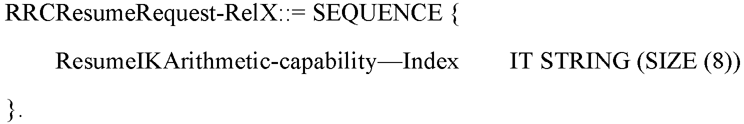

ResumeIKArithmetic-capability-Index is the index identifier representing the integrity protection algorithm and the integrity key calculation parameter that are used for the RRC resume request message sent by the UE.

In some other embodiments of this application, the UE may define a medium access control control element (Medium Access Control Control Element, MAC_CE), to carry the index identifier through the MAC CE.

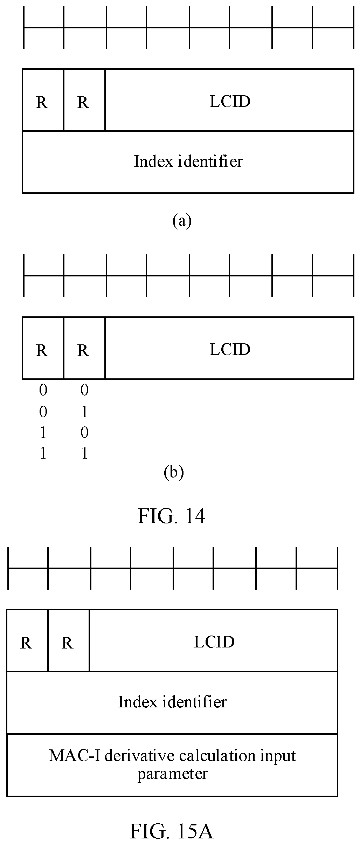

In an example, the MAC_CE may include a first field and a second field. As shown in (a) in FIG. 14, the first field carries a logical channel identifier (Logical Channel Identification, LCID), and the second field carries the index identifier. The LCID indicates logical channel data. In this embodiment of this application, the LCID indicates that the MAC_CE carries the index identifier. For example, the index identifier may be 8-bit.

It may be understood that the 8-bit LCID may have 2⁸ (that is, 64) values, for example, 00 to 63. Some of the 64 values of the LCID may indicate the logical channel data. For example, when the LCID is 64, the LCID may indicate a timing advance command (Timing Advance Command); or when the LCID is 60, the LCID may indicate a discontinuous reception (Discontinuous Reception, DRX) command. Certainly, some values of the LCID may also be reserved bits. A 16-bit LCID is used as an example. In 2¹⁶ (that is, 256) possible values of the LCID, 000 to 244 are usually reserved bits. For details, refer to descriptions in the conventional technology.

In some examples, the MAC_CE further includes a reserved bit. As shown in (a) in FIG. 14, R is a reserved bit.

In another example, the index identifier may be carried through the reserved bit of the MAC_CE, to reduce encoding costs of the MAC_CE. As shown in (b) in FIG. 14, the MAC_CE includes two reserved bits. Four index identifiers may be carried through the two reserved bits. For example, when the two reserved bits are "00", "01", "10", and "11", different index identifiers are indicated respectively.

It may be understood that in some cases, for example, when the UE in the inactive state moves from a coverage area of a base station 1 (that is, the anchor base station) to a coverage area of a base station 2 and resides in a cell covered by the base station 2, the base station 2 does not learn of a security protection algorithm determined by the UE and the base station 1 (that is, the anchor base station) through negotiation. As a result, when the base station 1 requests the base station 2 for an RRC context of the UE, there may be a problem of desynchrony of a security protection capability. In this embodiment of this application, the UE carries the index identifier in the RRC resume request message, to notify the serving-gNB of the integrity protection algorithm and the integrity key calculation parameter that are used by the UE.

Further, in some embodiments of this application, to further ensure integrity of another message reusing a MAC layer with the RRC resume request message to avoid problems of a request failure, low data transmission efficiency or even a data transmission failure, and the like caused by a misunderstanding of the network node to a request from the UE, and the like caused by falsification of the MAC message, in the method provided in this embodiment of this application, integrity protection may further be performed on the MAC layer message.

For example, the UE may carry a MAC-I derivative calculation input parameter through the MAC_CE, as shown in FIG. 15A. The MAC-I derivative calculation input parameter includes a MAC layer message reusing the MAC layer with a message such as the RRC resume request message.

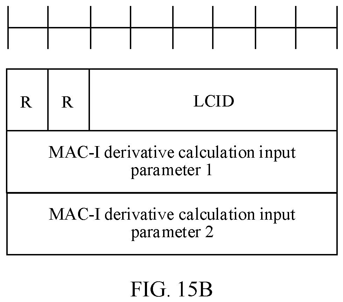

In some cases, if a plurality of MAC layer messages reuse the MAC layer with a message such as the RRC resume request message, the MAC_CE may carry a plurality of MAC-I derivative calculation input parameters, for example, a MAC-I derivative calculation input parameter 1 and a MAC-I derivative calculation input parameter 2 in FIG. 15B. A reserved bit R shown in FIG. 15B may carry the index identifier.

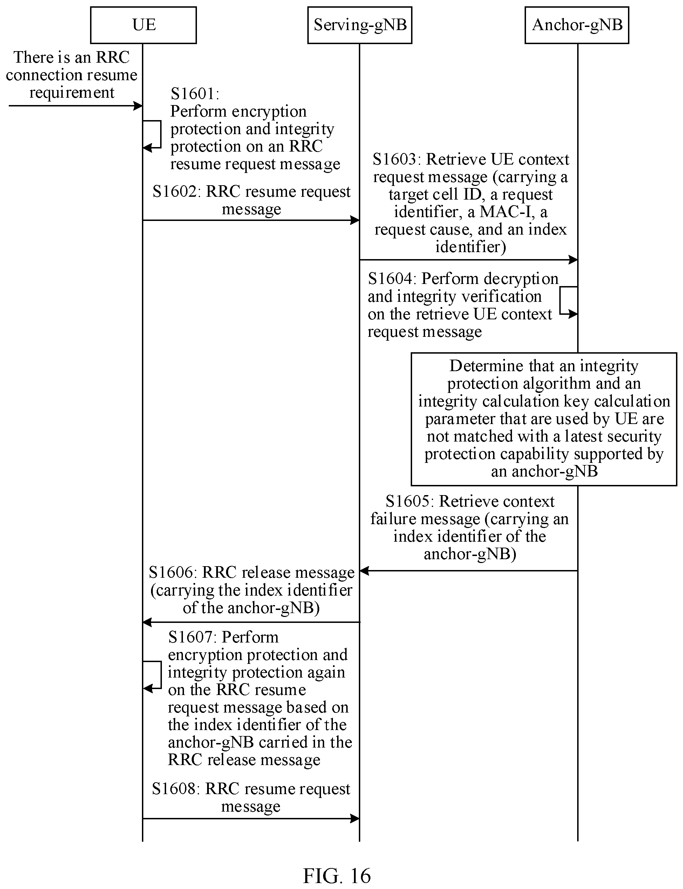

In some embodiments, if a retrieve UE context request message passes integrity verification of the anchor-gNB, but the anchor-gNB determines that the integrity protection algorithm and the integrity key calculation parameter that are used by the UE are not matched with a latest security protection capability supported by the anchor-gNB, the anchor-gNB may further initiate a reauthentication indication. FIG. 16 is a schematic diagram 3 of an interaction process of the data transmission protection method according to an embodiment of this application. As shown in FIG. 16, the data transmission protection method provided in this embodiment of this application may also be implemented based on steps S1601 to S1608. S1601 to S1604 are similar to S1301 to S1304 in FIG. 13. S1605 to S1608 are as follows.

S1605: An anchor-gNB (that is, the second node) sends a retrieve context failure message to a serving-gNB (that is, the first node).

The retrieve context failure message (that is, a retrieve context failure message) indicates that an RRC context obtaining request fails.

In some embodiments, as shown in FIG. 16, the retrieve context failure message may carry an index identifier of the anchor-gNB. The index identifier of the anchor-gNB represents a latest integrity protection algorithm and a latest integrity key calculation parameter that are supported by the anchor-gNB.

S1606: The serving-gNB (that is, the first node) sends an RRC release message to the UE.

As shown in FIG. 16, the RRC release message carries the index identifier of the anchor-gNB.

Further, the UE may perform encryption protection and integrity protection again on an RRC resume request message based on the index identifier of the anchor-gNB carried in the RRC release message (as shown in S1607 in FIG. 16), and reinitiate an RRC connection resume request (as shown in S1608 in FIG. 16).

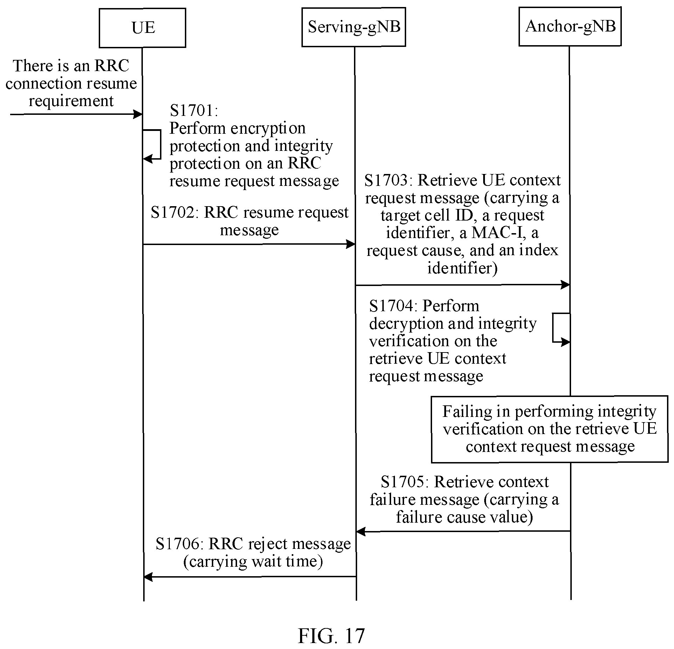

If the anchor-gNB fails in performing integrity verification on a retrieve UE context request message, in a possible implementation, the anchor-gNB may further feed back a failure cause (failure cause) value to the serving-gNB. FIG. 17 is a schematic diagram 4 of an interaction process of the data transmission protection method according to an embodiment of this application. As shown in FIG. 17, the data transmission protection method provided in this embodiment of this application may also be implemented based on steps S1701 to S1706. S1701 to S1704 are similar to S1301 to S1304 in FIG. 13. S1705 and S1706 are as follows.

S1705: An anchor-gNB (that is, the second node) sends a retrieve context failure message to a serving-gNB (that is, the first node).

The retrieve context failure message indicates that an RRC context obtaining request fails.

In some embodiments, as shown in FIG. 16, the retrieve context failure message may carry a failure cause (failure cause) value. A failure cause is, for example, that a security protection algorithm is not matched or integrity verification fails.

The anchor-gNB sends the failure cause (failure cause) value to the serving-gNB, so that the serving-eNB can conveniently learn of a specific cause and make a corresponding response. For example, if the failure cause (failure cause) is that integrity verification fails, it is speculated that the message is falsified at a high possibility. For such a request, to ensure that the network node responds with an error to a falsified message, when the UE frequently initiates a same request, the serving-gNB may reject the request, or the serving-gNB may reject within preset time to respond to a same request initiated by the UE.

S1706: The serving-gNB (that is, the first node) sends an RRC reject message to the UE.

The RRC reject message indicates that an RRC context obtaining request fails.

In some embodiments, as shown in FIG. 17, the RRC reject message may carry wait time (wait time), to indicate the UE to no longer initiate a same request within the wait time.

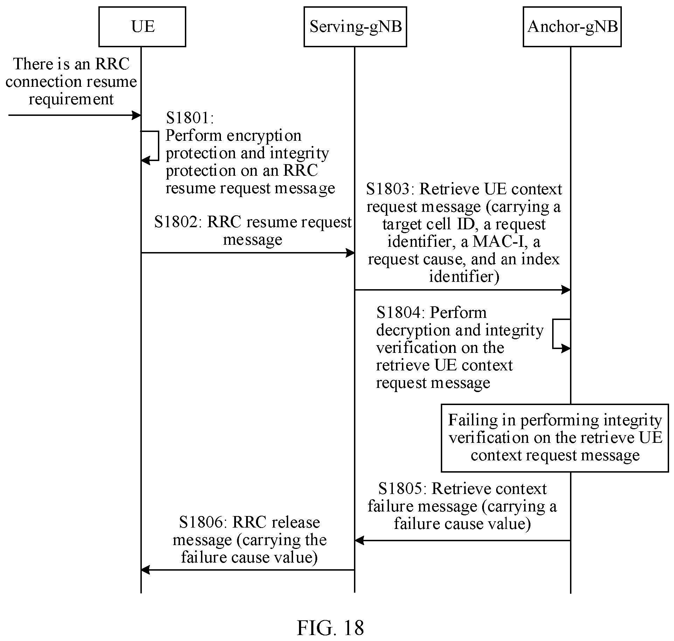

If the anchor-gNB fails in performing integrity verification on the retrieve UE context request message, in a possible implementation, the anchor-gNB may further feed back a failure cause (failure cause) value to the UE through the serving-gNB. FIG. 18 is a schematic diagram 5 of an interaction process of the data transmission protection method according to an embodiment of this application. As shown in FIG. 18, the data transmission protection method provided in this embodiment of this application may also be implemented based on steps S1801 to S1806. S1801 to S1804 are similar to S1301 to S1304 in FIG. 13. S1805 is similar to S1705 in FIG. 17. S1806 is as follows.

S1806: A serving-gNB (that is, the first node) sends an RRC release message to the UE.

The RRC release message indicates that an RRC context obtaining request fails.

In some embodiments, as shown in FIG. 18, the RRC release message may carry a failure cause (failure cause) value, to notify the UE of a specific cause why the RRC context obtaining request fails, so that the UE makes a corresponding response. A failure cause is, for example, that a security protection algorithm is not matched or integrity verification fails. For example, if the failure cause is that integrity verification fails, the UE speculates that the message is falsified at a high possibility. For such a request, the UE may no longer initiate the same request within the preset time, to avoid the message being falsified again when reinitiating the request.

In embodiments of this application, the data transmission protection methods shown in FIG. 12, FIG. 13, FIG. 16, and FIG. 17 may be performed based on synchronization of the security protection capability between the network nodes shown in FIG. 5A, FIG. 5B, FIG. 6A, FIG. 6B, FIG. 7, or FIG. 8, or may be performed based on a conventional data transmission mechanism. This is not limited in this application.

It should be noted that merely an example in which that integrity protection and integrity verification are performed on the RRC resume request message for resuming the RRC connection is used in the foregoing embodiments of this application, and the data transmission protection method provided in this application may also be applied to another data/signaling transmission process.

In the data transmission protection method provided in embodiments of this application, a unified solution is provided, to simplify a processing process and computation for integrity verification while ensuring the privacy and the integrity of the data during transmission in many cases in which a communication technology is upgraded, a new communication mechanism is introduced, security protection capabilities of UE are different, security protection capabilities of network nodes are different, and the like.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or part of the functions described above. For a detailed working process of the foregoing system, apparatus, and unit, reference may be made to a corresponding process in the foregoing method embodiments, and details are not described herein again.

In the several embodiments provided in this embodiment, it should be understood that the disclosed system, apparatus, and method may be implemented in other manners. For example, the described apparatus embodiment is merely an example. For example, the module or unit division is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this embodiment may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this embodiment essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium capable of storing program code, such as a flash memory, a removable hard disk, a read-only memory, a random access memory, a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A data transmission protection method, wherein the method comprises:
sending, by a first node to a second node, information representing a security protection capability supported by the first node,
wherein the method further comprises:
receiving (S301), by the first node, a radio resource control resume request message from user equipment UE, wherein the radio resource control resume request message comprises an inactive radio network temporary identifier I-RNTI, a message authentication code for integrity MAC-I, and a request cause;
determining, by the first node, that an anchor base station of the UE is the second node; and
sending (S302), by the first node, a retrieve UE context request message to the second node, wherein the retrieve UE context request message carries a cell identifier of a target cell, the I-RNTI, the MAC-I, and the request cause,
wherein the radio resource control resume request message and the retrieve UE context request message further carry a second index identifier, and the second index identifier represents an integrity protection algorithm and an integrity key calculation parameter that are used by the UE to perform security protection on the radio resource control resume request message.

2. The method according to claim 1, wherein the first node sends a security parameter of the first node to the second node through a communication interface setup request message; and
the security parameter of the first node represents the information about the security protection capability supported by the first node.

3. The method according to claim 2, wherein the communication interface setup request message is an Xn interface setup request message.

4. The method according to claim 1, wherein the first node sends a security parameter of the first node to the second node through a configuration update message; and
the security parameter of the first node represents the information about the security protection capability supported by the first node.

5. The method according to claim 4, wherein the configuration update message is a next generation radio access network node configuration update message, and the method further comprises:
receiving, by the first node, a next generation radio access network node configuration update acknowledge message from the second node.

6. The method according to any one of claims 1 to 5, wherein the method further comprises:
when there is an update of the security protection capability supported by the first node, sending, by the first node to the second node, information representing a latest security protection capability supported by the first node.

7. The method according to any one of claims 1 to 6, wherein the method further comprises:
sending, by the first node, a broadcast message, wherein
the broadcast message carries the information representing the security protection capability supported by the first node and/or information representing a security protection capability supported by the second node.

8. The method according to any one of claims 2 to 5, wherein
the security parameter of the first node comprises a first index identifier, and the first index identifier represents an integrity protection algorithm and an integrity key calculation parameter that are supported by the first node.

9. The method according to any one of claims 1 to 8, wherein
the retrieve UE context request message comprises a message body container, and the container encapsulates one or more of the following information: the I-RNTI, the MAC-I, the request cause, the cell identifier, and the second index identifier.

10. The method according to any one of claims 1 to 9, wherein the method further comprises:
receiving, by the first node, a retrieve context failure message from the second node, wherein the retrieve context failure message carries information representing a latest security protection capability supported by the second node; and
sending, by the first node, a radio resource control release message to the UE, wherein the radio resource control release message carries the information representing the latest security protection capability supported by the second node, and is used by the UE to perform security protection again on the radio resource control resume request message based on the information about the latest security protection capability supported by the second node.

11. A first node, wherein the first node comprises:
a memory (221), configured to store a computer program;
a transceiver (250; 260), configured to receive or send a radio signal; and
a processor (210), configured to execute the computer program, so that the first node performs the method according to any one of claims 1 to 10.

12. A computer-readable storage medium, wherein the computer-readable storage medium stores computer program code, and when the computer program code is executed by a processing circuit, the method according to any one of claims 1 to 10 is performed.

13. A computer program product, wherein the computer program product is configured to run on a computer, to perform the method according to any one of claims 1 to 10.

## Patentansprüche

1. Ein Verfahren zum Schutz der Datenübertragung, wobei das Verfahren Folgendes umfasst:
Senden von einer ersten Knotenstelle an eine zweite Knotenstelle von Informationen, die eine von der ersten Knotenstelle unterstützte Sicherheitsschutzfähigkeit darstellen,
wobei das Verfahren ferner umfasst:
Empfangen (S301) einer Nachricht über die Wiederaufnahme der Funkressourcensteuerung durch die erste Knotenstelle von einem Benutzergerät (UE), wobei die Nachricht über die Wiederaufnahme der Funkressourcensteuerung eine inaktive Funknetz-Temporärkennung (I-RNTI), einen Nachrichten-Authentifizierungscode zur Integritätssicherung (MAC-I) und eine Anforderungsursache umfasst;
Bestimmung durch die erste Knotenstelle, dass eine Anker-Basisstation des UE die zweite Knotenstelle ist; und
Senden (S302) einer Abrufanforderung für den UE-Kontext durch die erste Knotenstelle an die zweite Knotenstelle, wobei die Abrufanforderung für den UE-Kontext eine Zellkennung der Zielzelle, die I-RNTI, den MAC-I und die Anforderungsursache trägt,
wobei die Nachricht über die Wiederaufnahme der Funkressourcensteuerung und die Abrufanforderung für den UE-Kontext ferner einen zweiten Indexbezeichner tragen, und der zweite Indexbezeichner steht für einen Integritätsschutz-Algorithmus und einen Integritätsschlüssel-Berechnungsparameter, die vom UE zum Sicherheitsschutz der Funkressourcensteuerungs-Wiederaufnahmeanforderung verwendet werden.

2. Verfahren nach Anspruch 1, wobei die erste Knotenstelle einen Sicherheitsparameter der ersten Knotenstelle an die zweite Knotenstelle mittels einer Kommunikationsschnittstellen-Einrichtungsanforderungsnachricht sendet; und
der Sicherheitsparameter der ersten Knotenstelle die Informationen über die von der ersten Knotenstelle unterstützte Sicherheitsschutzfähigkeit darstellt.

3. Verfahren nach Anspruch 2, wobei die Kommunikationsschnittstellen-Einrichtungsanforderungsnachricht eine Xn-Schnittstellen-Einrichtungsanforderungsnachricht ist.

4. Verfahren nach Anspruch 1, wobei die erste Knotenstelle einen Sicherheitsparameter der ersten Knotenstelle an die zweite Knotenstelle mittels einer Konfigurationsaktualisierungsnachricht sendet; und
der Sicherheitsparameter der ersten Knotenstelle die Informationen über die von der ersten Knotenstelle unterstützte Sicherheitsschutzfähigkeit darstellt.

5. Verfahren nach Anspruch 4, wobei die Konfigurationsaktualisierungsnachricht eine Konfigurationsaktualisierungsnachricht eines Knotenpunkts für das Funkzugangsnetz der nächsten Generation ist, und das Verfahren ferner umfasst:
Empfangen einer Bestätigungsnachricht über die Konfigurationsaktualisierung eines Knotenpunkts für das Funkzugangsnetz der nächsten Generation durch die erste Knotenstelle von der zweiten Knotenstelle.

6. Verfahren nach einem der Ansprüche 1 bis 5, wobei das Verfahren ferner umfasst:
Wenn eine Aktualisierung der von dem ersten Knoten unterstützten Sicherheitsschutzfähigkeit vorliegt, sendet der erste Knoten an den zweiten Knoten Informationen, die eine aktuelle, vom ersten Knoten unterstützte Sicherheitsschutzfähigkeit repräsentieren.

7. Verfahren nach einem der Ansprüche 1 bis 6, wobei das Verfahren weiterhin umfasst:
Senden einer Rundfunknachricht durch den ersten Knoten, wobei
die Rundfunknachricht die Information trägt, welche die von dem ersten Knoten unterstützte Sicherheitsschutzfähigkeit und/oder eine Sicherheitsschutzfähigkeit, die von dem zweiten Knoten unterstützt wird, repräsentiert.

8. Verfahren nach einem der Ansprüche 2 bis 5, wobei
der Sicherheitsparameter des ersten Knotens einen ersten Indexbezeichner umfasst, und der erste Indexbezeichner einen Integritätsschutz-Algorithmus sowie einen Integritätsschlüssel-Berechnungsparameter repräsentiert, die vom ersten Knoten unterstützt werden.

9. Verfahren nach einem der Ansprüche 1 bis 8, wobei
die Retrieve-UE-Kontext-Anforderungsnachricht einen Nachrichtenrumpf-Container umfasst, und der Container eine oder mehrere der folgenden Informationen kapselt: die I-RNTI, die MAC-I, den Anforderungsgrund, die Zellkennung und den zweiten Indexbezeichner.

10. Verfahren nach einem der Ansprüche 1 bis 9, wobei das Verfahren weiterhin umfasst:
Empfangen einer Kontext-Abruf-Fehlernachricht durch den ersten Knoten vom zweiten Knoten, wobei die Kontext-Abruf-Fehlernachricht Informationen trägt, die eine aktuelle von dem zweiten Knoten unterstützte Sicherheitsschutzfähigkeit darstellen; und
Senden einer Freigabenachricht für die Funkressourcensteuerung durch den ersten Knoten an das UE, wobei die Freigabenachricht Informationen trägt, die die aktuelle, vom zweiten Knoten unterstützte Sicherheitsschutzfähigkeit repräsentieren, und vom UE genutzt wird, um den Funkressourcensteuerungs-Fortsetzungsanforderungsnachricht basierend auf Informationen über die aktuell unterstützte Sicherheitsschutzfähigkeit des zweiten Knotens erneut sicherheitstechnisch zu schützen.

11. Ein erster Knoten, wobei der erste Knoten Folgendes umfasst:
einen Speicher (221), der zum Speichern eines Computerprogramms konfiguriert ist;
einen Transceiver (250; 260), der zum Empfangen oder Senden eines Funksignals konfiguriert ist; und
einen Prozessor (210), der zum Ausführen des Computerprogramms konfiguriert ist, so dass der erste Knoten das Verfahren nach einem der Ansprüche 1 bis 10 ausführt.

12. Ein computerlesbares Speichermedium, wobei das computerlesbare Speichermedium einen Computerprogrammcode speichert und, wenn der Computerprogrammcode von einer Verarbeitungsschaltung ausgeführt wird, das Verfahren nach einem der Ansprüche 1 bis 10 ausgeführt wird.

13. Ein Computerprogrammprodukt, wobei das Computerprogrammprodukt so konfiguriert ist, dass es auf einem Computer ausgeführt werden kann, um das Verfahren gemäß einem der Ansprüche 1 bis 10 durchzuführen.

## Revendications

1. Procédé de protection de la transmission de données, ledit procédé comprenant :
l'envoi, par un premier nœud à un second nœud, d'informations représentant une capacité de protection de sécurité prise en charge par le premier nœud,
le procédé comprenant en outre :
la réception (S301), par le premier nœud, d'un message de reprise du contrôle des ressources radio depuis un équipement utilisateur UE, ledit message de reprise comprenant un identifiant temporaire inactif de réseau radio I-RNTI, un code d'authentification de message pour l'intégrité MAC-I et un motif de demande ;
la détermination, par le premier nœud, que la station de base d'ancrage de l'UE est le second nœud ; et
l'envoi (S302), par le premier nœud, d'un message de demande de récupération de contexte UE au second nœud, ledit message transportant un identifiant de cellule de la cellule cible, l'I-RNTI, le MAC-1 et le motif de demande,
le message de reprise du contrôle des ressources radio ainsi que le message de demande de récupération de contexte UE transportant en outre un second identifiant d'index, ce dernier représentant un algorithme de protection d'intégrité et un paramètre de calcul de clé d'intégrité utilisés par l'UE pour assurer la protection de sécurité du message de reprise du contrôle des ressources radio.

2. Procédé selon la revendication 1, dans lequel le premier nœud envoie un paramètre de sécurité du premier nœud au second nœud via un message de demande d'établissement d'interface de communication ; et
le paramètre de sécurité du premier nœud représente les informations concernant la capacité de protection de sécurité prise en charge par le premier nœud.

3. Procédé selon la revendication 2, dans lequel le message de demande d'établissement d'interface de communication est un message de demande d'établissement d'interface Xn.

4. Procédé selon la revendication 1, dans lequel le premier nœud envoie un paramètre de sécurité du premier nœud au second nœud via un message de mise à jour de configuration ; et
le paramètre de sécurité du premier nœud représente les informations concernant la capacité de protection de sécurité prise en charge par le premier nœud.

5. Procédé selon la revendication 4, dans lequel le message de mise à jour de configuration est un message de mise à jour de configuration de nœud de réseau d'accès radio de nouvelle génération, et le procédé comprend en outre :
la réception, par le premier nœud, d'un message accusant réception de la mise à jour de configuration de nœud de réseau d'accès radio de nouvelle génération en provenance du second nœud.

6. Procédé selon l'une quelconque des revendications 1 à 5, ledit procédé comprenant en outre :
lorsqu'il y a une mise à jour de la capacité de protection de la sécurité prise en charge par le premier nœud, envoi, par le premier nœud au second nœud, d'une information représentant la dernière capacité de protection de la sécurité prise en charge par le premier nœud.

7. Le procédé selon l'une quelconque des revendications 1 à 6, dans lequel le procédé comprend en outre :
envoi, par le premier nœud, d'un message de diffusion, dans lequel
le message de diffusion transporte l'information représentant la capacité de protection de la sécurité prise en charge par le premier nœud et/ou l'information représentant une capacité de protection de la sécurité prise en charge par le second nœud.

8. Le procédé selon l'une quelconque des revendications 2 à 5, dans lequel
le paramètre de sécurité du premier nœud comprend un premier identifiant d'index, et le premier identifiant d'index représente un algorithme de protection de l'intégrité et un paramètre de calcul de clé d'intégrité pris en charge par le premier nœud.

9. Le procédé selon l'une quelconque des revendications 1 à 8, dans lequel
le message de demande de récupération de contexte UE comprend un conteneur de corps de message, et le conteneur encapsule une ou plusieurs des informations suivantes : l'I-RNTI, le MAC-I, le motif de la demande, l'identifiant de la cellule, et le second identifiant d'index.

10. Le procédé selon l'une quelconque des revendications 1 à 9, dans lequel le procédé comprend en outre :
réception, par le premier nœud, d'un message d'échec de récupération de contexte du second nœud, dans lequel le message d'échec de récupération de contexte transporte une information représentant la dernière capacité de protection de la sécurité prise en charge par le second nœud ; et
envoi, par le premier nœud, d'un message de libération du contrôle des ressources radio à l'UE, dans lequel le message de libération du contrôle des ressources radio transporte l'information représentant la dernière capacité de protection de la sécurité prise en charge par le second nœud, et est utilisé par l'UE pour effectuer à nouveau la protection de la sécurité sur le message de reprise de contrôle des ressources radio en fonction de l'information concernant la dernière capacité de protection de la sécurité prise en charge par le second nœud.

11. Un premier nœud, dans lequel le premier nœud comprend :
une mémoire (221), conçue pour stocker un programme informatique ;
un émetteur-récepteur (250 ; 260), conçu pour recevoir ou envoyer un signal radio ; et
un processeur (210), conçu pour exécuter le programme informatique, de sorte que le premier nœud réalise le procédé selon l'une quelconque des revendications 1 à 10.

12. Un support de stockage lisible par ordinateur, dans lequel le support de stockage lisible par ordinateur stocke un code de programme informatique, et lorsqu'il est exécuté par un circuit de traitement, le procédé selon l'une quelconque des revendications 1 à 10 est réalisé.

13. Un produit programme d'ordinateur, ledit produit programme d'ordinateur étant conçu pour s'exécuter sur un ordinateur afin de mettre en œuvre le procédé selon l'une quelconque des revendications 1 à 10.
